(19) Europäisches Patentamt
European Patent Office
Office européen des brevets

(11) EP 1 529 087 B1

# (12) EUROPÄISCHE PATENTSCHRIFT

(45) Veröffentlichungstag und Bekanntmachung des Hinweises auf die Patenterteilung:
**06.03.2019 Patentblatt 2019/10**

(21) Anmeldenummer: **03783984.2**

(22) Anmeldetag: **24.06.2003**

(51) Int Cl.:
***C09J 153/00*** (2006.01) ***C08F 293/00*** (2006.01)

(86) Internationale Anmeldenummer:
**PCT/EP2003/006614**

(87) Internationale Veröffentlichungsnummer:
**WO 2004/015020 (19.02.2004 Gazette 2004/08)**

## (54) VERWENDUNG VON HAFTKLEBEMASSEN MIT HOHEM BRECHUNGSINDEX AUF BASIS VON ACRYLATBLOCKCOPOLYMEREN ZUR VERKLEBUNG VON OPTISCH TRANSPARENTEN SUBSTRATEN

USE OF ADHESIVE MATERIALS HAVING A HIGH REFRACTIVE INDEX BASED ON ACRYLATE BLOCK COPOLYMERS FOR ADHESION ON OPTICAL TRANSPARENT SUBSTRATES

UTILISATION DE MATIERES AUTO-ADHESIVES PRESENTANT UN INDICE DE REFRACTION ELEVE A BASE DE COPOLYMERES SEQUENCES ACRYLIQUES POUR L'AGGLUTINATION SUR UN SUBSTRAT OPTIQUEMENT TRANSPARENT

(84) Benannte Vertragsstaaten:
**DE ES FR GB IT**

(30) Priorität: **27.07.2002 DE 10234246**

(43) Veröffentlichungstag der Anmeldung:
**11.05.2005 Patentblatt 2005/19**

(73) Patentinhaber: **tesa SE**
**22848 Norderstedt (DE)**

(72) Erfinder:
- **DOLLASE, Thilo**
  **22391 Hamburg (DE)**
- **HUSEMANN, Marc**
  **22605 Hamburg (DE)**

(56) Entgegenhaltungen:
**EP-A- 1 008 640**
**EP-A- 1 308 493**
**EP-A- 1 312 658**
**WO-A-02/10307**
**WO-A-02/10308**
**WO-A-03/000794**
**DE-A- 10 036 802**
**US-A- 5 763 548**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft die Verwendung von Haftklebemassen auf Basis von eines oder mehrerer Blockcopolymere, wobei das oder die Blockcopolymer/e zumindest teilweise auf Basis von (Meth-)Acrylsäurederivaten zusammengesetzt ist/sind, wobei das/die Blockcopolymer/e die Einheit P(A)-P(B)-P(A) aus wenigstens einem Polymerblock P(B) und wenigstens zwei Polymerblöcken P(A) aufweist/aufweisen, wobei P(A) unabhängig voneinander Homo- oder Copolymerblöcke aus Monomeren der Gruppe A repräsentieren, wobei die (Co-)Polymerblöcke P(A) jeweils eine Erweichungstemperatur im Bereich von 0 °C bis + 175 °C aufweisen, wobei weiterhin P(B) einen Homo- oder Copolymerblock aus Monomeren der Gruppe B repräsentiert, wobei der (Co-)Polymerblock P(B) eine Erweichungstemperatur im Bereich von - 130 °C bis + 10 °C aufweist, wobei weiterhin die (Co-)Polymerblöcke P(A) und P(B) bei 25 °C nicht homogen miteinander mischbar sind, zur Verklebung von optisch transparenten Substraten.

Bei der Auslegung und Gestaltung optischer Bauteile muss die Wechselwirkung der verwendeten Materialien mit der Art des eingestrahlten Lichts berücksichtigt werden. In einer abgeleiteten Version nimmt der Energieerhaltungssatz die Form

$$T(\lambda) + p(\lambda) + a(\lambda) = 1$$

an, wobei T(λ) den Anteil des transmittierten Lichts, p(λ) den Anteil des reflektierten Lichts und a(A) den Anteil des absorbierten Lichts beschreibt (λ: Wellenlänge) und wobei die Gesamtintensität des eingestrahlten Lichts auf 1 normiert ist. Je nach Anwendung des optischen Bauteils gilt es, einzelne dieser drei Terme zu optimieren und die jeweils anderen zu unterdrücken. Optische Bauteile, die für die Transmission ausgelegt werden, sollen sich durch Werte von T(λ), die nahe bei 1 liegen, auszeichnen. Dies erreicht man, indem p(λ) und a(A) im Betrag reduziert werden. Haftklebemassen auf Acrylatcopolymer- und Acrylatblockcopolymerbasis weisen normalerweise keine nennenswerte Absorption im sichtbaren Bereich, d. h. im Wellenlängenbereich zwischen 400 nm und 700 nm, auf.

Dies kann leicht durch Messungen mit einem UV-Vis Spektralphotometer überprüft werden. Von entscheidendem Interesse ist daher p(λ). Reflexion ist ein Grenzflächenphänomen, das von den Brechungsindices $n_{d,i}$ von zwei in Kontakt tretenden Phasen i nach der Fresnel-Gleichung

$$\rho(\lambda) = \left( \frac{n_{d,2} - n_{d,1}}{n_{d,2} + n_{d,1}} \right)^2$$

abhängt. Für den Fall isorefraktiver Materialien, für die $n_{d,2} = n_{d,1}$ gilt, wird p(λ) = 0. Dies erklärt die Notwendigkeit, den Brechungsindex einer für optische Bauteile zu verwendenden Haftklebemasse denjenigen der zu verklebenden Materialien anzupassen. Typische Werte für verschiedene solcher Materialien sind in Tabelle 1 aufgeführt.

Tabelle 1

| Material | Brechungsindex $n_d$ |
|---|---|
| Quarzglas | 1,458 |
| Borkron (BK7) | 1,514 |
| Borkron | 1,518 |
| Flint | 1,620 |
| (Quelle: Pedrotti, Pedrotti, Bausch, Schmidt, Optik, 1996, Prentice-Hall, München. Daten bei A = 588 nm) | |

Eine konkrete Anwendung zur Verklebung eines optischen Bauteils ist die Verklebung optisch aktiver Folien für Anzeigemodule auf Flüssigkristallbasis (sog. LC-Displays), die den Sichtwinkel des Betrachters bedeutend vergrößern. Zur Befestigung solcher Folien werden hohe Anforderungen gestellt. So sollte der Kleber hochtransparent sein, damit sich die Lichtleistung des LC-Displays nur geringfügig verringert. Dies lässt sich dem obengesagten entsprechend erreichen, indem die Anteile absorbierten und reflektierten Lichts minimiert werden. Daher besteht die Notwendigkeit, den Brechungsindex des Klebers demjenigen des zu fügenden optischen Bauteils anzupassen.

Neben der Verklebung von optisch aktiven Folien auf LC-Displays existieren aber auch noch eine Vielzahl

anderer Anwendungen, z.B. auch für den Augenbereich, die zusätzliche Anforderungen an den Kleber stellen.

Generell können zur Verklebung zwar Flüssigkleber (z.B. erhältlich von der Fa. Norland) eingesetzt werden, die nach der Aushärtung einen festen Verbund ausbilden. Flüssigkleber besitzen aber den Nachteil, dass zum einen die zu verklebende optische Folie oder das Glas mit Lösemitteln in Kontakt tritt, was in einigen Fällen vermieden werden soll. Des weiteren benötigen Flüssigkleber als inhärenten Nachteil gegenüber Haftklebemassen viel Zeit für den Trocknungs- bzw. Aushärtungsvorgang.

Haftklebemassen müssen durch ihre inhärente Klebrigkeit eine relativ geringe Glasübergangstemperatur besitzen. Dies limitiert den Aromatenanteil und somit den maximalen Brechungsindex.
Dennoch existieren verschiedene Haftklebemassetypen, die sehr hohe Brechungsindizes erreichen. Silikonkautschuke sind hier sehr gut geeignet (US 4,874,671) sind aber aus Kostengründen häufig nicht einsetzbar.
In US 5,639,530 werden weiterhin Styrol-Diene, Blockcopolymere zur Verklebung von reflektierenden Materialien eingesetzt. In US 6,266,166 wird ein Acrylathaftklebeband zur Herstellung von Hologrammen eingesetzt. Hier wird durch Harzzusatz eines hochtransparenten und mit einem hohen Brechungsindex ausgestatteten Harzes der Brechungsindex auf etwa 1,52 angehoben. Nachteilig ist aber wiederum der Harzzusatz, der das Foggingverhalten der Acrylathaftklebemasse bedeutend verschlechtert. Dies gilt auch für die anderen Zusätze, wie z.B. Aromaten oder halogenhaltige Verbindungen.

Aufgabe der Erfindung ist es, hochtransparente Haftklebemassen mit guten Haftklebeeigenschaften auf Basis einer großen Auswahl von Monomeren auf Acrylatbasis zur Verfügung zu stellen, wobei die Haftklebemassen insbesondere ein geringes Fogging- und/oder Ausgasungsverhalten aufweisen.

Gelöst werden kann die Aufgabe überraschend und nicht vorhersehbar durch die Herstellung von Haftklebemassen auf Blockcopolymerbasis, bei denen einzelne Polymerblöcke und/oder Copolymerblöcke unterschiedliche Brechungsindizes aufweisen.

Die Erfindung betrifft dementsprechend Haftklebemassen auf Basis eines oder mehrerer Blockcopolymere, wobei zumindest ein Blockcopolymer zumindest teilweise auf Basis von (Meth-)Acrylsäurederivaten zusammengesetzt ist, wobei das zumindest eine Blockcopolymer mindestens die Einheit P(A)-P(B)-P(A) aus wenigstens einem Polymerblock P(B) und wenigstens zwei Polymerblöcken P(A) aufweist, wobei

- P(A) unabhängig voneinander Homo- oder Copolymerblöcke mindestens zu 75 Gew.-% aus Monomeren der Gruppe A repräsentieren, wobei die (Co-)Polymerblöcke P(A) jeweils eine Erweichungstemperatur im Bereich von 0 °C bis + 175 °C aufweisen,
- P(B) einen Homo- oder Copolymerblock aus Monomeren der Gruppe B repräsentiert, wobei der (Co-)Polymerblock P(B) eine Erweichungstemperatur im Bereich von - 130 °C bis + 10 °C aufweist,
- die (Co-)Polymerblöcke P(A) und P(B) bei 25 °C nicht homogen miteinander mischbar sind,

dadurch gekennzeichnet, dass

- die Haftklebemasse einen Brechungsindex $n_{d,H}$ von $n_{d,H} \geq 1,52$ bei 25 °C aufweist,
- zumindest einer der (Co-)Polymerblöcke P(A) einen Brechungsindex $n_{d,A}$ von $n_{d,A} \geq 1,58$ bei 25 °C aufweist,
- der (Co-)Polymerblock P(B) einen Brechungsindex $n_{d,B}$ von $n_{d,B} \geq 1,43$ bei 25 °C aufweist.

Somit ist es erstmals möglich, den Brechungsindex einer Acrylathaftklebemasse durch die Wahl der Monomere vor der Polymerisation und eine geeignet gewählte Polymerisationsweise (nämlich durch Herstellung von Blockcopolymeren) weitgehend frei zu steuern und dabei hinreichend hohe Brechungsindizes zu erzielen, ohne dabei bei den gewünschten Haftklebeeigenschaften des Produktes Abstriche hinnehmen zu müssen. Die Erfindung bietet den Vorteil, für die Erzielung eines gewünschten Brechungsindex nicht auf die Zumischung weiterer Komponenten angewiesen zu sein, sondern die Beimischung derartiger Komponenten in Abhängigkeit der gewünschten Haftklebeeigenschaften frei wählen zu können.

Durch die erfindungsgemäßen Haftklebemassen lassen sich somit eine großen Anzahl von Monomeren für die Synthese einer Haftklebemasse mit hohem Brechungsindex nutzen, so dass eine breite Palette von Haftklebeeigenschaften durch die chemische Zusammenstellung eingestellt werden kann; weiterhin ergibt sich der Vorteil, dass hoch kohäsive Haftklebemassenschichten ohne zusätzliche Vernetzungsschritte im Prozess hergestellt werden können.

Für die Erfindung kann es von besonderem Vorteil sein, wenn alle (Co-)Polymerblöcke P(A) jeweils einen Brechungsindex $n_{d,A}$ von $n_{d,A} \geq 1,58$ bei 25 °C aufweisen.

Im erfindungsgemäßen Sinne ist es weiterhin von Vorteil, wenn das beziehungsweise die Blockcopolymere zumindest zu 50 Gew.-% in der Haftklebemasse vorliegen.

Der Brechungsindex $n_d$ ist nach dem Snelliusschen Brechungsgesetz definiert und hängt von der Wellenlänge des eingestrahlten Lichts und von der Temperatur ab. Er wird in dieser Schrift als derjenige Wert verstanden, der bei T = 20 °C und weißem Licht ($\lambda$ = 550 nm $\pm$ 150 nm) gemessen wird.

Im weiteren werden die Polymerblöcke P(A) auch als Hartblöcke und die Polymerblöcke P(B) als Elastomerblöcke bezeichnet.

Unter Erweichungstemperatur wird bei amorphen Systemen die Glasübergangstemperatur und bei semikristallinen Systemen die Schmelztemperatur verstanden. Glastemperaturen werden als Ergebnisse aus quasistationären Verfahren wie z.B. Differential Scanning Calometry (DSC) angegeben.

Als im erfinderischen Sinne besonders vorteilhaft haben sich Haftklebemassen herausgestellt, die einen Brechungsindex $n_d$ von nicht weniger als 1,52 besitzen und bei denen der Aufbau des Blockcopolymers / der Blockcopolymere durch eine oder mehrere der folgenden allgemeinen Formeln beschrieben werden kann:

P(A)-P(B)-P(A) (I)

P(B)-P(A)-P(B)-P(A)-P(B) (II)

$[P(A)\text{-}P(B)]_nX$ (III)

$[P(A)\text{-}P(B)]_nX[P(A)]_m$ (IV),

wobei n = 3 bis 12, m = 3 bis 12 und X eine multifunktionelle Verzweigungseinheit darstellt, also ein chemisches Bauelement, über das verschiedene Polymerarme miteinander verknüpft sind, wobei weiterhin die Polymerblöcke P(A) unabhängig voneinander Homo- oder Copolymerblöcke mindestens zu 75 Gew.-% aus Monomeren der Gruppe A repräsentieren, wobei die Polymerblöcke P(A) jeweils eine Erweichungstemperatur im Bereich von 0 °C bis + 175 °C aufweisen und einen Brechungsindex $n_{d,A}$ von nicht weniger als 1,58 besitzen, und wobei die Polymerblöcke P(B) unabhängig voneinander Homo- oder Copolymerblöcke aus Monomeren der Gruppe B repräsentieren, wobei die Polymerblöcke P(B) jeweils eine Erweichungstemperatur im Bereich von - 130 °C bis + 10 °C aufweisen und einen Brechungsindex $n_{d,B}$ von nicht weniger als 1,43 besitzen.

Bei den Polymerblöcken P(A), wie sie im Hauptanspruch oder in den vorteilhaften Ausführungsformen beschrieben sind, kann es ich um Polymerketten einer einzigen Monomersorte aus der Gruppe A oder um Copolymere aus Monomeren verschiedener Strukturen aus der Gruppe A handeln, gegebenenfalls um Copolymere mindestens zu 75 Gew.-% aus Monomeren der Gruppe A und zu bis zu 25 Gew.-% aus Monomeren der Gruppe B. Insbesondere können die eingesetzten Monomere aus der Gruppe A in ihrer chemischen Struktur und/oder in der Seitenkettenlänge variieren. Die Polymerblöcke umfassen somit die Spanne zwischen vollkommen homogenen Polymeren über Polymere aus Monomeren gleicher chemischer Grundstruktur, aber unterschiedlicher Kettenlänge und solchen gleicher Kohlenstoffzahl, aber unterschiedlicher Isomerie bis hin zu statistisch polymerisierten Blöcken aus unterschiedlich langen Monomeren mit unterschiedlicher Isomerie aus der Gruppe A. Das entsprechende gilt für die Polymerblöcke P(B) bezüglich der Monomere aus der Gruppe B.

Im Sinne dieser Schrift soll der Begriff "Polymerblöcke" somit sowohl Homo- als auch Copolymerblöcke einschließen, soweit nicht etwas anderes im Einzelfall spezifiziert wird.

Die Einheit P(A)-P(B)-P(A) kann dabei sowohl symmetrisch [entsprechend $P^1(A)$-P(B)-$P^2(A)$ mit $P^1(A) = P^2(A)$] als auch unsymmetrisch [etwa entsprechend der Formel $P^3(A)$-P(B)-$P^4(A)$ mit $P^3(A) \neq P^4(A)$, wobei aber sowohl $P^3(A)$ als auch $P^4(A)$ jeweils Polymerblöcke im Sinne der Definition für P(A) seien] aufgebaut sein.

Eine vorteilhafte Ausführung ist es, wenn die Blockcopolymere einen symmetrischen Aufbau derart aufweisen, dass in der Kettenlänge und/oder der chemischen Struktur identische Polymerblöcke P(A) und/oder dass in der Kettenlänge und/oder der chemischen Struktur identische Polymerblöcke P(B) vorliegen.

$P^3(A)$ und $P^4(A)$ können sich insbesondere in ihrer chemischen Zusammensetzung und/oder ihrer Kettenlänge unterscheiden.

Ausgangsmonomeren der Gruppe A für die Polymerblöcke P(A) werden bevorzugt derart ausgewählt, dass die resultierenden Polymerblöcke P(A) mit den Polymerblöcken P(B) nicht mischbar sind und dementsprechend Mikrophasenseparation eintritt.

Vorteilhaft liegen die typischen Domänengrößen bei kleiner 400 nm, mehr bevorzugt bei kleiner 200 nm.

Geeignete Monomere der Gruppe A enthalten eine C=C-Doppelbindung, insbesondere eine oder mehrere Vinylgruppen im eigentlichen Sinne und/oder vinylähnliche Gruppen. Als vinylähnliche Gruppen werden hier solche Gruppen bezeichnet, bei der die Wasserstoffatome der ungesättigten C-Atome teilweise oder vollständig durch organische und/oder anorganische Reste substituiert sind. In diesem Sinne zählen auch Acrylsäure, Methacrylsäure und/oder deren Derivate zu den vinylähnliche Gruppen aufweisenden Verbindungen. Vorstehende Verbindungen werden im weiteren zusammenfassend als Vinylverbindungen bezeichnet.

Vorteilhafte Beispiele für Verbindungen, welche als Monomere der Gruppe A eingesetzt werden, sind Vinylaromaten, die als Polymerisate einen Brechungsindex von nicht weniger als 1,58 bei 25 °C besitzen. Konkrete Monomere, deren Aufzählung aber nur beispielhaft ist, sind z.B. Styrol, $\alpha$-Methylstyrol, o-Methylstyrol, o-Methoxystyrol, p-Methoxystyrol

oder 4-Methoxy-2-methylstyrol.
Weiterhin lassen sich als Monomere der Gruppe A vorteilhaft Acrylate, wie z.B. mit Acrylat terminiertes Polystyrol oder α-Bromphenylacrylat, einsetzen, und/oder Methacrylate, wie z.B. mit Methacrylat terminiertes Polystyrol (beispielsweise Methacromer PS 12 der Fa. Polymer Chemistry Innovations), 1,2-Diphenylethylmethacrylat, Diphenylmethylmethacrylat, o-Chlorbenzylmethacrylat, p-Bromphenyl-methacrylat, und/oder Acrylamide, wie z.B. N-Benzylmethacrylamid.
Die Monomere können auch in Gemischen miteinander eingesetzt werden. Da zur Erzielung eines Brechungsindex $n_d$ von nicht weniger als 1,58 für die Polymerblöcke P(A) auch Monomergemische eingesetzt werden können, kann auch eine oder mehrere Komponenten als Homopolymer einen Brechungsindex $n_d$ von kleiner 1,58 bei 25 °C besitzen. Konkrete Beispiele für derartige Comonomere ohne Anspruch auf Vollständigkeit sind o-Cresylmethacrylat, Phenylmethacrylat, Benzylmethacrylat oder o-Methoxyphenyl methacrylat.
Weiterhin können die Polymerblöcke P(A) aber auch derart als Copolymere aufgebaut sein, dass sie zu mindestens 75 % aus den vorstehenden Monomeren der Gruppe A oder einem Gemisch dieser Monomere bestehen können, was zu einer hohen Erweichungstemperatur führt, aber bis zu 25 % auch Monomere der Gruppe B enthalten können, was zu einer Erniedrigung der Erweichungstemperatur des Polymerblocks P(A) führt. In diesem Sinne seien beispielhaft Alkylacrylate genannt, die entsprechend der Struktur B1 und dem hierzu gesagten definiert sind.

Monomere der Gruppe B für den Elastomerblock P(B) werden vorteilhaft ebenfalls so gewählt, dass sie C=C-Doppelbindungen (besonders Vinylgruppen und vinylähnliche Gruppen) aufweisen, mit der Maßgabe, dass der Polymerblock P(B) einen Brechungsindex $n_{d,B}$ von mindestens 1,43 aufweist.
Als Monomere der Gruppe B werden vorteilhaft Acrylatmonomere eingesetzt. Hierfür sind prinzipiell alle dem Fachmann geläufigen Acrylatverbindungen, welche sich zur Synthese von Polymeren eignen, einsetzbar. Bevorzugt werden solche Monomere gewählt, welche Glasübergangstemperaturen des Polymerblocks P(B) auch in Kombination mit einem oder mehreren weiteren Monomeren von kleiner +10 °C bedingen. Entsprechend können bevorzugt Vinylmonomere gewählt werden.

Für die Präparation der Polymerblöcke P(B) werden vorteilhaft zu 75 bis 100 Gew.-% Acrylsäure- und/oder Methacrylsäurederivate der allgemeinen Struktur

$$CH_2=CH(R^1)(COOR^2) \qquad (B1)$$

eingesetzt, wobei $R^1$ = H oder $CH_3$ und $R^2$ = H oder lineare, verzweigte oder ringförmige, gesättigte oder ungesättigte Kohlenwasserstoffketten mit 1 bis 30, insbesondere mit 4 bis 18 Kohlenstoffatomen darstellt,
und bis zu 25 Gew.-% an Monomeren (B2) aus der Gruppe der Vinylverbindungen, wobei diese Monomere B2 günstigenfalls funktionelle Gruppen enthalten.

Die vorstehenden Gewichtsprozentangaben addieren sich bevorzugt zu 100 %, die Summe kann aber auch weniger als 100 Gew.-% betragen, sofern weitere (polymerisierbare) Monomere vorhanden sind.

Acrylmonomere der Gruppe B, die sehr bevorzugt im Sinne der Verbindung B1 als Komponenten für Polymerblöcke P(B) eingesetzt werden, umfassen Acryl- und Methacrylsäureester mit Alkyl-, Alkenyl- und/oder Alkinylgruppen bestehend aus 4 bis 18 C-Atomen. Spezifische Beispiele für entsprechende Verbindungen sind, ohne sich durch diese Aufzählung einschränken zu wollen, n-Butylacrylat, n-Pentylacrylat, n-Hexylacrylat, n-Heptylacrylat, n-Octylacrylat, n-Nonylacrylat, Laurylacrylat, Stearylacrylat, Stearylmethacrylat, deren verzweigte Isomere, wie z.B. 2-Ethylhexylacrylat und Isooctylacrylat sowie cyclische Monomere wie z.B. Cyclohexyl- oder Norbornylacrylat und Isobornylacrylat.

Weiterhin können optional als Monomere B2 für Polymerblöcke P(B) Vinylmonomere aus den folgenden Gruppen eingesetzt werden: Vinylester, Vinylether, Vinylhalogenide, Vinylidenhalogenide, sowie Vinylverbindungen, die aromatische Cyclen und Heterocyclen in α-Stellung enthalten. Auch hier seien beispielhaft ausgewählte erfindungsgemäß einsetzbare Monomere genannt: Vinylacetat, Vinylformamid, Vinylpyridin, Ethylvinylether, 2-Ethylhexylvinylether, Butylvinylether, Vinylchlorid, Vinylidenchlorid, Acrylnitril.

Als besonders bevorzugte Beispiele für vinylgruppenhaltige Monomere im Sinne von B2 für den Elastomerblock P(B) eignen sich weiterhin Hydroxyethylacrylat, Hydroxypropylacrylat, Hydroxyethylmethacrylat, Hydroxypropylmethacrylat, N-Methylolacrylamid, Acrylsäure, Methacrylsäure, Allylalkohol, Maleinsäureanhydrid, Itaconsäureanhydrid, Itaconsäure, Benzoinacrylat, acryliertes Benzophenon, Acrylamid und Glycidylmethacrylat, um nur einige zu nennen.

Sämtliche einsetzbaren Monomere können ebenfalls in einer halogenierten Form verwendet werden.

In einer bevorzugten Ausführungsform der erfinderischen Haftklebemassen mit einem Brechungsindex nicht weniger als 1,52 enthalten einer oder mehrere der Polymerblöcke eine oder mehrere aufgepfropfte Seitenketten. Dabei kann es sich um Verbindungen handeln, bei denen die Seitenketten durch graft-from- (Aufpolymerisation einer Seitenkette ausgehend von einem bestehenden Polymerrückgrat) oder durch graft-to-Prozesse (Anbindung von Polymerketten an ein Polymerrückgrat über polymeranaloge Reaktionen) erhalten werden.

Als Makromonomere aus den Gruppen A und B können insbesondere zur Herstellung von Blockcopolymeren

mit Seitenketten derartig funktionalisierte Monomere gewählt werden, die einen graft-from-Prozess zum Aufpfropfen von Seitenketten ermöglichen. Hier sind insbesondere Acrylat- und Methacrylatmonomere zu nennen, die als Funktionalisierung Halogene tragen oder andere funktionellen Gruppen, die beispielsweise einen ATRP-Prozess (Atom Transfer Radical Polymerization) erlauben. In diesem Zusammenhang sei auch die Möglichkeit genannt, über die Zugabe von Makromonomeren während der Polymerisation gezielt Seitenketten in die Polymerketten einzuführen.

In einer speziellen Ausführung dieser Erfindung sind eine oder mehrere funktionelle Gruppen in die Polymerblöcke P(B) eingebaut, die eine strahlenchemische Vernetzung der Polymerblöcke insbesondere mittels UV-Bestrahlung oder durch Bestrahlung mit schnellen Elektronen erlauben. Als Monomereinheiten der Gruppe B können mit dieser Zielsetzung insbesondere Acrylester genutzt werden, welche einen ungesättigten Kohlenwasserstoffrest mit 3 bis 18 Kohlenstoffatomen enthalten, der mindestens eine Kohlenstoff-Kohlenstoff-Doppelbindung enthält. Für mit Doppelbindungen modifizierte Acrylate eignen sich besonders vorteilhaft Allylacrylat und acrylierte Zimtsäureester. Neben Acrylmonomeren lassen sich sehr vorteilhaft als Monomere für den Polymerblock P(B) auch Vinylverbindungen mit während der (radikalischen) Polymerisation des Polymerblockes P(B) nicht reagierenden Doppelbindungen einsetzen. Besonders bevorzugte Beispiele für entsprechende Comonomere sind Isopren und/oder Butadien, aber auch Chloropren.

In einer weiteren Ausführungsform der erfinderischen Haftklebemasse sind Polymerblöcke P(A) und/oder P(B) derart funktionalisiert, dass eine thermisch initiierte Vernetzung durchgeführt werden kann. Als Vernetzer können unter anderem in günstiger Weise gewählt werden: Epoxide, Aziridine, Isocyanate, Polycarbodiimide und Metallchelate, um nur einige zu nennen.

Ein bevorzugtes Charakteristikum der erfindungsgemäßen Haftklebemassen ist, dass die Molmasse $M_n$ (Zahlenmittel) zumindest eines der Blockcopolymere, bei mehreren Blockcopolymeren insbesondere aller Blockcopolymere zwischen ca. 10.000 und ca. 600.000 g/mol, bevorzugt zwischen 30.000 und 400.000 g/mol, besonders bevorzugt zwischen 50.000 g/mol und 300.000 g/mol liegt.

Der Anteil der Polymerblöcke P(A) liegt vorteilhaft zwischen 5 und 40 Gewichtsprozent des gesamten Blockcopolymers, bevorzugt zwischen 7,5 und 35 Gewichtsprozent, besonders bevorzugt zwischen 10 und 30 Gewichtsprozent. Die Polydispersität D des Blockcopolymers liegt bevorzugt bei kleiner 3, gegeben durch den Quotienten aus Massenmittel $M_w$ und Zahlenmittel $M_n$ der Molmassenverteilung. Bei mehreren Blockcopolymeren in der erfindungsgemäßen Haftklebemasse gelten die vorstehenden Angaben für die Anteile und die Polydispersität D vorteilhaft für zumindest eines der Blockcopolymere, bevorzugt jedoch für alle vorhandenen Blockcopolymere.

In einer Weiterentwicklung der Erfindung wird das Verhältnis $V_{A/B}$ [$V_{A/B} = \bar{\ell}_{P(A)}/\bar{\ell}_{P(B)}$] der mittleren Kettenlängen $\bar{\ell}_{P(A)}$ der Polymerblöcke P(A) zu den Kettenlängen $\bar{\ell}_{P(B)}$ der Polymerblöcke P(B) so gewählt wird, dass die Polymerblöcke P(A) als disperse Phase ("Domänen") in einer kontinuierlichen Matrix der Poylmerblöcke P(B) vorliegen, insbesondere als kugelförmige oder verzerrt kugelförmige oder zylinderförmige Domänen. Dies ist bevorzugt der Fall bei einem Gehalt an Polymerblöcken P(A) von kleiner als ca. 25 Gew.-%. Die Ausbildung von hexagonal gepackten zylindrischen Domänen der Polymerblöcke P(A) ist ebenfalls im erfinderischen Sinne möglich.

Bei weiteren vorteilhaften Ausführungsformen der erfindungsgemäßen Haftklebemasse beinhaltet diese einen Blend aus

- zumindest einem Diblockcopolymer mit zumindest einem Triblockcopolymer, oder
- zumindest einem Diblockcopolymer mit zumindest einem sternförmigen Blockcopolymer,
- zumindest einem Triblockcopolymer mit zumindest einem sternförmigen Blockcopolymer,

wobei bevorzugt zumindest eine der vorgenannten Komponenten, vorteilhaft alle Blockcopolymer-Komponenten des Blends solche Blockcopolymere im Sinne der Definition des Hauptanspruchs darstellen.

Besonders bevorzugte Ausführungsformen derartiger Blends sind die folgenden:

Blends der die Abfolge P(A)-P(B)-P(A) enthaltenden Blockcoplymere entsprechend des Hauptanspruchs mit Diblockcopolymeren P(A)-P(B), wobei zur Herstellung der entsprechenden Polymerblöcke P(A) und P(B) die gleichen Monomere wie oben genutzt werden können. Außerdem kann es von Vorteil sein, der aus den Blockcopolymeren, insbesondere aus Triblockcopolymeren (I), oder der aus einem Blockcopolymer/Diblockcopolymer-Blend bestehenden Haftklebemasse zur Verbesserung ihrer Eigenschaften Polymere P'(A) und/oder P'(B) zuzusetzen.

Dementsprechend betrifft die Erfindung weiterhin Haftklebemassen auf Basis eines Blends zumindest eines Blockcopolymeren, welches einen Brechungsindex $\mathbf{n_d}$ bei 25 °C von nicht weniger als 1,52 hat, mit einem Diblockcopolymer P(A)-P(B),

- wobei die Polymerblöcke P(A) der Diblockcopolymere unabhängig voneinander Homo- oder Copolymerblöcke aus den Monomeren der Gruppe A repräsentieren, wobei die Polymerblöcke P(A) der Diblockcopolymere jeweils eine Erweichungstemperatur im Bereich von 0 °C bis + 175 °C aufweisen und einen Brechungsindex $n_{d,A}$ von nicht weniger als 1,58 besitzen,

- und wobei die Polymerblöcke P(B) der Diblockcopolymere unabhängig voneinander Homo- oder Copolymerblöcke aus den Monomeren der Gruppe B repräsentieren, wobei die Polymerblöcke P(B) der Diblockcopolymere jeweils eine Erweichungstemperatur im Bereich von - 130 °C bis + 10 °C aufweisen und einen Brechungsindex $n_{d,B}$ von nicht weniger als 1,43 besitzen,

und/oder mit Polymeren P(A) und/oder P(B),

- wobei die Polymere P(A) Homo- und/oder Copolymere aus den Monomeren der Gruppe A repräsentieren, wobei die Polymere P(A) jeweils eine Erweichungstemperatur im Bereich von 0 °C bis + 175 °C aufweisen und einen Brechungsindex $n_{d,A'}$ von nicht weniger als 1,58 besitzen,
- wobei die Polymere P(B) Homo- und/oder Copolymere aus den Monomeren der Gruppe B repräsentieren, wobei die Polymere P(B) jeweils eine Erweichungstemperatur im Bereich von - 130 °C bis + 10 °C aufweisen und einen Brechungsindex $n_{d,B'}$ von nicht weniger als 1,43 besitzen,
- und wobei die Polymere P'(A) beziehungsweise P'(B) bevorzugt mit den Polymerblöcken P(A) beziehungsweise P(B) der Blockcopolymere entsprechend des Hauptanspruchs mischbar sind.

Sofern sowohl Polymere P'(A) und Polymere P'(B) zugemischt sind, werden diese vorteilhaft derart gewählt, dass die Polymere P'(A) und P'(B) nicht homogen miteinander mischbar sind.

Als Monomere für die Diblockcopolymere P(A)-P(B), für die Polymere P'(A) beziehungsweise P'(B) werden bevorzugt die bereits genannten Monomere der Gruppen A und B eingesetzt.

Die Diblockcopolymere weisen bevorzugt eine Molmasse $M_n$ (Zahlenmittel) zwischen 5.000 und 600.000 g/mol, mehr bevorzugt zwischen 15.000 und 400.000 g/mol, besonders bevorzugt zwischen 30.000 und 300.000 g/mol auf. Sie besitzen vorteilhaft eine Polydispersität D = $M_w/M_n$ von nicht mehr als 3. Es ist günstig, wenn der Anteil der Polymerblöcke P(A) in Bezug auf die Zusammensetzung des Diblockcopolymers zwischen 3 und 50 Gew.-%, bevorzugt zwischen 5 und 35 Gew.-% liegt.

Typische Einsatzkonzentration von Diblockcopolymeren im Blend betragen bis zu 250 Gewichtsteile auf 100 Gewichtsteile Blockcopolymere entsprechend des Hauptanspruchs enthaltend die Einheit P(A)-P(B)-P(A). Die Polymere P'(A) beziehungsweise P'(B) können als Homo- und auch ais Copolymere aufgebaut sein. Sie werden entsprechend dem oben gesagten vorteilhaft derart gewählt, dass sie mit den Polymerblöcken P(A) beziehungsweise P(B) (des Blockcopolymers entsprechend des Hauptanspruchs) verträglich sind. Die Kettenlänge der Polymere P'(A) beziehungsweise P'(B) ist in bevorzugter Weise derart gewählt, dass sie die des mit ihr bevorzugt mischbaren bzw. assoziierbaren Polymerblocks nicht übersteigt, vorteilhaft 10 % niedriger, sehr vorteilhaft 20 % niedriger ist als diese. Der B-Block kann vorteilhaft auch so gewählt werden, dass seine Länge die Hälfte der Blocklänge des B-Blocks des Triblockcopolymers nicht übersteigt.

Zur Herstellung der in den erfindungsgemäßen Haftklebemassen eingesetzten Blockcopolymere können prinzipiell alle kontrolliert oder lebend verlaufenden Polymerisationen eingesetzt werden, ebenso auch Kombinationen verschiedener kontrollierter Polymerisationsverfahren. Hierbei seien z.B., ohne den Anspruch auf Vollständigkeit zu besitzen, neben der anionischen Polymerisation die ATRP, die Nitroxid/TEMPO- kontrollierte Polymerisation oder mehr bevorzugt der RAFT-Prozess genannt, also insbesondere solche Verfahren, die eine Kontrolle der Blocklängen, Polymerarchitektur oder auch, aber nicht notwendigerweise, der Taktizität der Polymerkette erlauben.

Radikalische Polymerisationen können in Gegenwart eines organischen Lösungsmittels oder in Gegenwart von Wasser oder in Gemischen aus organischen Lösungsmitteln und/oder organischer Lösungsmittel mit Wasser oder in Substanz durchgeführt werden. Bevorzugt wird so wenig Lösungsmittel wie möglich eingesetzt. Die Polymerisationszeit für radikalische Prozesse beträgt - je nach Umsatz und Temperatur - typischerweise zwischen 4 und 72 h.

Bei der Lösungsmittelpolymerisation werden als Lösemittel vorzugsweise Ester gesättigter Carbonsäuren (wie Ethylacetat), aliphatische Kohlenwasserstoffe (wie n-Hexan, n-Heptan oder Cyclohexan), Ketone (wie Aceton oder Methylethylketon), Siedegrenzenbenzin, aromatische Lösungsmittel wie Toluol oder Xylol oder Gemische vorgenannter Lösungsmittel verwendet. Für die Polymerisation in wäßrigen Medien beziehungsweise Gemischen aus organischen und wäßrigen Lösungsmitteln werden zur Polymerisation bevorzugt Emulgatoren und Stabilisatoren zugesetzt.
Findet eine Methode der radikalischen Polymerisation Anwendung, werden als Polymerisationsinitiatoren vorteilhaft übliche radikalbildende Verbindungen wie beispielsweise Peroxide, Azoverbindungen und Peroxosulfate eingesetzt. Auch Initiatorengemische eignen sich hervorragend.

Zur Radikalstabilisierung werden in günstiger Vorgehensweise Nitroxide des Typs (NIT 1) oder (NIT 2) eingesetzt:

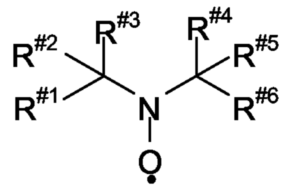

(NIT 1)

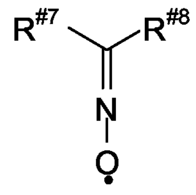

(NIT 2)

wobei $R^{\#1}$, $R^{\#2}$, $R^{\#3}$, $R^{\#4}$, $R^{\#5}$, $R^{\#6}$, $R^{\#7}$, $R^{\#8}$ unabhängig voneinander folgende Verbindungen oder Atome bedeuten:

i) Halogenide, wie z.B. Chlor, Brom oder Iod
ii) lineare, verzweigte, cyclische und heterocyclische Kohlenwasserstoffe mit 1 bis 20 Kohlenstoffatomen, die gesättigt, ungesättigt oder aromatisch sein können,
iii) Ester $-COOR^{\#9}$, Alkoxide $-OR^{\#10}$ und/oder Phosphonate $-PO(OR^{\#11})_2$,

wobei $R^{\#9}$, $R^{\#10}$ und/oder $R^{\#11}$ für Reste aus der Gruppe ii) stehen.

Verbindungen der Struktur (NIT 1) oder (NIT 2) können auch an Polymerketten jeglicher Art gebunden sein (vorrangig in dem Sinne, dass zumindest einer der oben genannten Reste eine derartige Polymerkette darstellt) und somit zum Aufbau der Blockcopolymere als Makroradikale oder Makroregler genutzt werden.

Mehr bevorzugt werden kontrollierte Regler für die Polymerisation von Verbindungen des Typs:

- 2,2,5,5-Tetramethyl-1-pyrrolidinyloxyl (PROXYL), 3-Carbamoyl-PROXYL, 2,2-dimethyl-4,5-cyclohexyl-PROXYL, 3-oxo-PROXYL, 3-Hydroxylimine-PROXYL, 3-Aminomethyl-PROXYL, 3-Methoxy-PROXYL, 3-t-Butyl-PROXYL, 3,4-Di-t-butyl-PROXYL
- 2,2,6,6-Tetramethyl-1-piperidinyloxyl (TEMPO), 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6,-Tetraethyl-1-piperidinyloxyl, 2,2,6-Trimethyl-6-ethyl-1-piperidinyloxyl
- N-tert.-Butyl-1-phenyl-2-methyl propyl Nitroxid
- N-tert.-Butyl-1-(2-naphtyl)-2-methyl propyl Nitroxid
- N-tert.-Butyl-1-diethylphosphono-2,2-dimethyl propyl Nitroxid
- N-tert.-Butyl-1-dibenzylphosphono-2,2-dimethyl propyl Nitroxid
- N-(1-Phenyl-2-methyl propyl)-1-diethylphosphono-1-methyl ethyl Nitroxid
- Di-t-Butylnitroxid
- Diphenylnitroxid
- t-Butyl-t-amyl Nitroxid

US 4,581,429 A offenbart ein kontrolliert radikalisches Polymerisationsverfahren, das als Initiator eine Verbindung der Formel R'R"N-O-Y anwendet, worin Y eine freie radikalische Spezies ist, die ungesättigte Monomere polymerisieren kann. Die Reaktionen weisen aber im allgemeinen geringe Umsätze auf. Besonders problematisch ist die Polymerisation von Acrylaten, die nur zu sehr geringen Ausbeuten und Molmassen abläuft. WO 98/13392 A1 beschreibt offenkettige Alkoxyaminverbindungen, die ein symmetrisches Substitutionsmuster aufweisen. EP 735 052 A1 offenbart ein Verfahren zur Herstellung thermoplastischer Elastomere mit engen Molmassenverteilungen. WO 96/24620 A1 beschreibt ein Polymerisationsverfahren, bei dem sehr spezielle Radikalverbindungen wie z. B. phosphorhaltige Nitroxide, die auf Imidazolidin basieren, eingesetzt werden. WO 98/44008 A1 offenbart spezielle Nitroxyle, die auf Morpholinen, Piperazinonen und Piperazindionen basieren. DE 199 49 352 A1 beschreibt heterozyklische Alkoxyamine als Regulatoren in kontrolliert radikalischen Polymerisationen. Entsprechende Weiterentwicklungen der Alkoxyamine bzw. der korrespondierenden freien Nitroxide verbessern die Effizienz zur Herstellung von Polyacrylaten (Hawker, Beitrag zur Hauptversammlung der American Chemical Society, Frühjahr 1997; Husemann, Beitrag zum IUPAC World-Polymer Meeting 1998, Gold Coast).

Als weitere kontrollierte Polymerisationsmethode läßt sich in vorteilhafter Weise zur Synthese der Blockcopolymere die Atom Transfer Radical Polymerization (ATRP) einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe (EP 0 824 111 A1; EP 826 698 A1; EP 824 110 A1; EP 841 346 A1; EP 850 957 A1) eingesetzt werden. Die unterschiedlichen Möglichkeiten der ATRP sind ferner in den Schriften US 5,945,491 A, US 5,854,364 A und US 5,789,487 A beschrieben.

Weiterhin vorteilhaft kann das erfindungsgemäß genutzte Blockcopolymer über eine anionische Polymerisation hergestellt werden. Hier werden als Reaktionsmedium bevorzugt inerte Lösungsmittel verwendet, wie z. B. aliphatische und cycloaliphatische Kohlenwasserstoffe, oder auch aromatische Kohlenwasserstoffe.

Das lebende Polymer wird im allgemeinen durch die Struktur $P_L(A)$-Me repräsentiert, wobei Me ein Metall der Gruppe I des Periodensystems, wie z.B. Lithium, Natrium oder Kalium, und $P_L(A)$ ein wachsender Polymerblock aus den Monomeren A. Die Molmasse des herzustellenden Polymerblocks wird durch das Verhältnis von Initiatorkonzentration zu Monomerkonzentration vorgegeben. Zum Aufbau der Blockstruktur werden zunächst die Monomere A für den Aufbau eines Polymerblocks P(A) hinzugegeben, dann wird anschließend durch Zugabe der Monomere B ein Polymerblock P(B) angeknüpft und nachfolgend durch erneute Zugabe von Monomeren A ein weiterer Polymerblock P(A) polymerisiert, so dass ein Triblockcopolymer P(A)-P(B)-P(A) entsteht. Alternativ kann P(A)-P(B)-M durch eine geeignete difunktionelle Verbindung gekuppelt werden. Auf diesem Weg sind auch sternförmige Multiblockcopolymere nach Formel (II) zugänglich.

Als geeignete Polymerisationsinitiatoren eignen sich z. B. n-Propyllithium, n-Butyllithium, sec-Butyllithium, 2-Naphthyllithium, Cyclohexyllithium oder Octyllithium, wobei diese Aufzählung nicht den Anspruch auf Vollständigkeit besitzt. Ferner sind Initiatoren auf Basis von Seltenerdelement-Komplexen zur Polymerisation von Acrylaten bekannt (Macromolecules, 1995, 28, 7886) und hier einsetzbar.

Weiterhin lassen sich auch difunktionelle Initiatoren einsetzen, wie beispielsweise 1,1,4,4-Tetraphenyl-1,4-dilithiobutan oder 1,1,4,4-Tetraphenyl-1,4-dilithioisobutan. Coinitiatoren lassen sich ebenfalls einsetzen. Geeignete Coinitiatoren sind unter anderem Lithiumhalogenide, Alkalimetallalkoxide oder Alkylaluminium-Verbindungen. In einer sehr bevorzugten Version sind die Liganden und Coinitiatoren so gewählt, dass Acrylatmonomere, wie z. B. n-Butylacrylat und 2-Ethylhexylacrylat, direkt polymerisiert werden können und nicht im Polymer durch eine Umesterung mit dem entsprechenden Alkohol generiert werden müssen.

Als sehr bevorzugter Herstellprozeß wird eine Variante der RAFT-Polymerisation (reversible addition-fragmentation chain transfer polymerization) durchgeführt. Der Polymerisationsprozeß ist z. B. in den Schriften WO 98/01478 A1 und WO 99/31144 A1 ausführlich beschrieben. Zur Herstellung von Triblockcopolymeren eignen sich besonders vorteilhaft Trithiocarbonate der allgemeinen Struktur R'''-S-C(S)-S-R''' (Macromolecules 2000, 33, 243-245), mittels derer in einem ersten Schritt Monomere für die Endblöcke P(A) polymerisiert werden. In einem zweiten Schritt wird anschließend der Mittelblock P(B) synthetisiert. Nach der Polymerisation der Endblöcke P(A) kann die Reaktion abgebrochen und reinitiiert werden. Ferner kann auch ohne Reaktionsunterbrechung sequentiell polymerisiert werden. In einer sehr vorteilhaften Variante werden beispielsweise die Trithiocarbonate (TTC 1) und (TTC 2) oder die Thioverbindungen (THI 1) und (THI 2) zur Polymerisation eingesetzt, wobei $\phi$ ein Phenylring, der unfunktionalisiert oder durch Alkyl- oder Arylsubstituenten, die direkt oder über Ester- oder Etherbrücken verknüpft sind, funktionalisiert sein kann, oder eine Cyanogruppe sein kann, oder einen gesättigten oder ungesättgten aliphatischen Rest sein kann. Der Phenylring $\phi$ kann optional einen oder mehrere Polymerblöcke, beispielsweise Polybutadien, Polyisopren, Polychloropren oder Poly(meth)acrylat, das entsprechend der Definition für P(A) oder P(B) aufgebaut sein kann, oder Polystyrol tragen, um nur einige zu nennen. Funktionalisierungen können beispielsweise Halogene, Hydroxygruppen, Epoxidgruppen, stickstoff- oder schwefelenthaltende Gruppen sein, ohne daß diese Liste Anspruch auf Vollständigkeit erhebt.

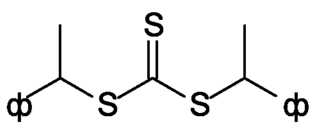

(TTC 1)

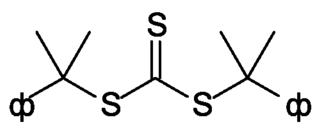

(TTC 2)

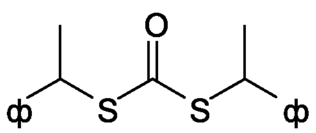

(THI 1)

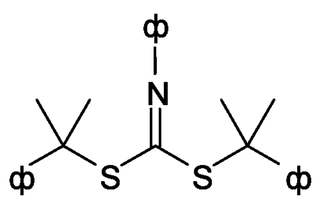

(THI 2)

Außerdem können Thioester der allgemeinen Struktur

$R^{\$1}$-C(S)-S-$R^{\$2}$ (THE)

zum Einsatz kommen, insbesondere, um asymmetrische Systeme herzustellen. Dabei können $R^{\$1}$ und $R^{\$2}$ unabhängig voneinander gewählt werden und $R^{\$1}$ ein Rest aus einer der folgenden Gruppen i) bis iv) und $R^{\$2}$ ein Rest aus einer der folgenden Gruppen i) bis iii) sein kann:

i) $C_1$- bis $C_{18}$-Alkyl, $C_2$- bis $C_{18}$-Alkenyl, $C_2$- bis $C_{18}$-Alkinyl, jeweils linear oder verzweigt; Aryl-, Phenyl-, Benzyl-, aliphatische und aromatische Heterozyklen.
ii) $-NH_2$, $-NH-R^{\$3}$, $-NR^{\$3}R^{\$4}$, $-NH-C(O)-R^{\$3}$, $-NR^{\$3}-C(O)-R^{\$4}$, $-NH-C(S)-R^{\$3}$, $-NR^{\$3}-C(S)-R^{\$4}$,

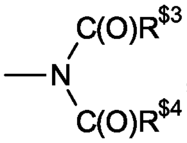 , 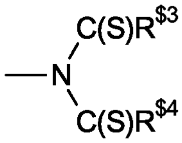 , 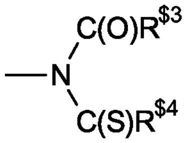

wobei $R^{\$3}$ und $R^{\$4}$ unabhängig voneinander gewählte Reste aus der Gruppe i) sind.
iii) $-S-R^{\$5}$, $-S-C(S)-R^{\$5}$, wobei $R^{\$5}$ ein Rest aus einer der Gruppen i) oder ii) sein kann.
iv) $-O-R^{\$6}$, $-O-C(O)-R^{\$6}$, wobei $R^{\$6}$ ein Rest gewählt aus einer der Gruppen i) oder ii) sein kann.

In Verbindung mit den obengenannten kontrolliert radikalisch verlaufenden Polymerisationen werden Initiatorsysteme bevorzugt, die zusätzlich weitere radikalische Initiatoren zur Polymerisation enthalten, insbesondere thermisch zerfallende radikalbildende Azo- oder Peroxoinitiatoren. Prinzipiell eignen sich hierfür jedoch alle für Acrylate bekannten üblichen Initiatoren. Die Produktion von C-zentrierten Radikalen ist im Houben-Weyl, Methoden der Organischen Chemie, Vol. E19a, S. 60ff beschrieben. Diese Methoden werden in bevorzugter Weise angewendet. Beispiele für Radikalquellen sind Peroxide, Hydroperoxide und Azoverbindungen. Als einige nicht ausschließliche Beispiele für typische Radikalinitiatoren seien hier genannt: Kaliumperoxodisulfat, Dibenzoylperoxid, Cumolhydroperoxid, Cyclohexanonperoxid, Cyclohexylsulfonylacetylperoxid, Di-tert-butylperoxid, Azodiisobutyronitril, Diisopropylpercarbonat, tert-Butylperoctoat, Benzpinacol. In einer sehr bevorzugten Variante wird als radikalischer Initiator 1,1'-Azo-bis-(cyclo-hexylnitril) (Vazo 88®, DuPont®) oder 2,2-Azo-bis-(2-methylbutannitril) (Vazo 67®, DuPont®) verwendet. Weiterhin können auch Radikalquellen verwendet werden, die erst unter UV-Bestrahlung Radikale freisetzen.

Beim konventionellen RAFT-Prozess wird zumeist nur bis zu geringen Umsätzen polymerisiert (WO 98/01478 A1), um möglichst enge Molekulargewichtsverteilungen zu realisieren. Durch die geringen Umsätze lassen sich diese Polymere aber nicht als Haftklebemassen und insbesondere nicht als Schmelzhaftkleber einsetzen, da der hohe Anteil an Restmonomeren die klebtechnischen Eigenschaften negativ beeinflußt, die Restmonomere im Aufkonzentrationsprozeß das Lösemittelrecyclat verunreinigen und die entsprechenden Selbstklebebänder ein sehr hohes Ausgasungsverhalten zeigen würden.
Das Lösemittel wird bevorzugt in einem Aufkonzentrationsextruder unter vermindertem Druck abgezogen, wozu beispielsweise Ein- oder Doppelschneckenextruder eingesetzt werden können, die bevorzugt das Lösemittel in verschiedenen oder gleichen Vakuumstufen abdestillieren und über eine Feedvorwärmung verfügen.

Den blockcopolymerhaltigen Haftklebemassen können optional Klebharze beigemischt werden. Prinzipiell lassen sich alle in dem entsprechenden Polyacrylatmittelblock P(B) löslichen Harze verwenden. Geeignete Klebharze umfassen unter anderem Kolophonium und Kolophoniumderivate (Kolophoniumester, auch durch z. B. Disproportionierung oder Hydrierung stabilisierte Kolophoniumderivate), Polyterpenharze, Terpenphenolharze, Alkylphenolharze, aliphatische, aromatische und aliphatisch-aromatische Kohlenwasserstoffharze, um nur einige zu nennen. Vorrangig werden Harze gewählt, die vorzugsweise mit dem Elastomerblock verträglich sind. Der Gewichtsanteil der Harze am Blockcopolymer beträgt typischerweise bis zu 40 Gew.-%, mehr bevorzugt bis zu 30 Gew.-%.
Für spezielle Ausführungsformen der Erfindung können auch Harze verwendet werden, die mit dem Polymerblock P(A) verträglich sind.

Weiterhin können optional Weichmacher (Plastifizierungsmittel), Füllstoffe (z. B. Fasern, Ruß, Zinkoxid, Titandioxid, Kreide, Voll- oder Hohlglaskugeln, Mikrokugeln aus anderen Materialien, Kieselsäure, Silikate), Keimbildner, Blähmittel, Compoundierungsmittel und/oder Alterungsschutzmittel, z. B. in Form von primären und sekundären Antioxidantien oder in Form von Lichtschutzmitteln zugesetzt werden.

Generell ist bei den Zusatzstoffen, wie Harzen, Hilfsstoffen und Weichmachern zu beachten, dass diese das Ausgasungsverhalten nicht verschlechtern. Es sollten somit bevorzugt Substanzen eingesetzt werden, die auch unter hoher Temperaturbelastung eine sehr geringe Flüchtigkeit besitzen. Bei der Verwendung von Additiven und Zusatzstoffen ist darauf zu achten, dass im Falle einer auftretenden Mehrphasigkeit die typischen Domänengrößen bei kleiner 400 nm, mehr bevorzugt bei kleiner 200 nm liegen.

Bevorzugt wird die innere Festigkeit (Kohäsion) der Haftklebemasse durch die physikalische Vernetzung der Polymerblöcke P(A) erzeugt. Die so erhaltene physikalische Vernetzung ist typischerweise thermoreversibel. Für eine nichtreversible Vernetzung können die Haftklebemassen zusätzlich chemisch vernetzt werden. Hierzu können die acrylatblockcopolymerhaltigen Haftklebemassen optional verträgliche Vernetzersubstanzen enthalten. Als Vernetzer eignen sich z. B. Metallchelate, multifunktionelle Isocyanate, multifunktionelle Amine oder multifunktionelle Alkohole. Auch multifunktionelle Acrylate lassen sich vorteilhaft als Vernetzer für eine actinische Bestrahlung verwenden.

Zur optionalen Vernetzung mit UV-Licht werden den polyacrylathaltigen Blockcopolymeren, welche in den erfindungsgemäßen Systemen zum Einsatz kommen, UV-absorbierende Photoinitiatoren zugesetzt. Nützliche Photoinitiatoren, welche sehr gut zu verwenden sind, sind Benzoinether, wie z. B. Benzoinmethylether und Benzoinisopropylether, substituierte Acetophenone, wie z. B. 2,2-Diethoxyacetophenon (erhältlich als Irgacure 651 von Fa. Ciba Geigy®), 2,2-Dimethoxy-2-phenyl-1-phenylethanon, Dimethoxyhydroxyacetophenon, substituierte $\alpha$-Ketole, wie z. B. 2-Methoxy-2-hydroxypropiophenon, aromatische Sulfonylchloride, wie z. B. 2-Naphthylsulfonylchlorid, und photoaktive Oxime, wie z. B. 1-Phenyl-1,2-propandion-2-(O-ethoxycarbonyl)oxim.

Die oben erwähnten und weitere einsetzbare Photoinitiatoren und andere vom Typ Norrish-I oder Norrish-II können folgenden Reste enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin-, und/oder Fluorenon, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier: ‚Photoinitiation, Photopolymerization and Photocuring: Fundamentals and Applications", Hanser-Verlag, München 1995, gegeben. Ergänzend kann Carroy et al. in ‚Chemistry and Technology of UV and EB Formulation for Coatings, Inks and Paints", Oldring (Hrsg.), 1994, SITA, London zu Rate gezogen werden.

Prinzipiell ist es auch möglich, die erfindungsgemäß eingesetzten Haftklebemassen mit Elektronenstrahlen zu vernetzen. Typische Bestrahlungsvorrichtungen, die zum Einsatz kommen können, sind Linearkathodensysteme, Scannersysteme bzw. Segmentkathodensysteme, sofern es sich um Elektronenstrahlbeschleuniger handelt. Eine ausführliche Beschreibung des Standes der Technik und die wichtigsten Verfahrensparameter findet man bei Skelhorne, Electron Beam Processing, in Chemistry and Technology of UV and EB formulation for Coatings, Inks and Paints, Vol. 1, 1991, SITA, London. Die typischen Beschleunigungsspannungen liegen im Bereich zwischen 50 kV und 500 kV, vorzugsweise 80 kV und 300 kV. Die angewandten Streudosen bewegen sich zwischen 5 bis 150 kGy, insbesondere zwischen 20 und 100 kGy.

Sehr vorteilhaft verwendbar sind die erfindungsgemäßen Haftklebemassen für ein- oder doppelseitig mit Klebemasse ausgerüstete Haftklebesysteme; so beispielsweise für Pads, Etiketten, Klebestreifen, Klebefolien etc, wobei die Haftklebesysteme mit oder ohne Träger vorgesehen sein können und ein-, zwei- oder mehrlagig gestaltet sein können. Die erfindungsgemäßen Haftklebemassen lassen sich besonders hervorragend für ein- oder doppelseitige Klebebänder verwenden, insbesondere auch für reversible (rückstandsfrei wiederlösbare) Systeme. Beispiele für die vorteilhafte Verwendung der erfindungsgemäßen Haftklebemasse werden nachstehend aufgezeigt.

Die erfindungsgemäßen Haftklebebänder können insbesondere wie folgt aufgebaut sein:

a] einschichtige Klebstofffolien bestehend aus einer Haftklebeschicht aus einer erfindungsgemäßen Haftklebemasse
b] mehrschichtige Klebstofffolien, welche als Haftklebeschicht ein- oder beidseitig zumindest eine erfindungsgemäße Haftklebemasse nutzt.

a) Einschichtige Produktaufbauten

Auf Grund der hohen Kohäsion der Acrylatblockcopolymere können acrylatblockcopolymerhaltige Selbstklebestreifen oder -folien aus einer Einzelschicht a (Fig. 1) mit einer Dicke von bis zu mehreren Millimetern hergestellt werden. Infolge der intrinsischen UV-Stabilität benötigen entsprechende Selbstklebestreifen/-folien keine oder nur sehr geringe Mengen an Lichtschutzmitteln. Wasserklar transparente Ausführungsformen hoher Lichtstabilität sind daher leicht zugänglich. Die Haftklebemassen können auf für Haftklebebänder geläufige Folien, wie z.B. Polyester, PET, PE, PP, BOPP, Polyamid, Polyimid, Polyurethane, PVC, auf Vliese, auf Schäume oder auf Gewebe und Gewebefolien beschichtet werden. Zur Herstellung von Transfer-Tapes werden die erfindungsgemäßen Haftklebemassen auf Trennpapier (Glassine, HDPE, LDPE) beschichtet. Weiterhin können die Trägermaterialien optische Effekte, z.B. Strukturierung oder Colorierung oder durch Hologramme, besitzen. Ein konkretes Beispiel sind z.B. retroflektierende Systeme, wie sie z.B. in US 5,639,530 beschrieben werden. Weitere geeignete Trägermaterialien für einseitige Haftklebebänder sind z.B. in US 3,140,340, US 3,648,348, US 4,576,850, US 4,588,258, US 4,775,219, US 4,801,193, US 4,805,984, US 4,895,428, US 4,906,070, US 4,938,563, US 5,056,892, US 5,138,488, US 5,175,030 und US 5,183,597 beschrieben. Im Sinne dieser Anmeldung ist die Verwendung transparenter Träger zu bevorzugen, aber nicht notwendig.

b) Mehrschichtaufbauten

Des weiteren können basierend auf die erfindungsgemäßen Haftklebemassen mehrschichtige Selbstklebestreifen/-folien hergestellt werden, z. B. zweischichtige, dreischichtige oder auch Multischichtsysteme.
In der einfachsten Ausführung wird mit der erfindungsgemäßen Haftklebemasse ein doppelseitiges Haftklebeband aufgebaut, wobei als Trägermaterial wiederum die unterschiedlichsten Folien, wie z.B. Polyester, PET, PE, PP, BOPP, Polyamid, Polyimid, Polyurethane oder PVC eingesetzt werden können. Auch Vliese, Schäume, Gewebe oder Gewebefolien lassen sich als Trägermaterialien zu doppelseitigen Beschichtungen einsetzen. Zur Aufrollung zum Haftklebeband werden die doppelseitigen Haftklebebänder bevorzugt mit einem Trennpapier eingedeckt. Als Trennpapiere eignen sich Glassine-, HDPE- oder LDPE-Liner, die in einer bevorzugten Auslegung einen abgestuften Release besitzen. Weiterhin lassen sich als Träger- und Stabilisierungsfolie wiederum Folien einsetzen, die ebenfalls eine hohen Brechungsindex $n_d$ von nicht weniger als 1,52 bei 25 °C besitzen. Die Folien können ebenfalls zur Erfüllung bestimmter optischer Effekte strukturiert und/oder gefärbt sein.

Die Haftklebemassen (insbesondere auf Selbstklebebändern) werden zur Verklebung von optisch transparenten Substraten verwendet. So lassen sich z.B. für den Außenbereich Glasscheiben verkleben, wobei die Transparenz erhalten bleibt. Dies ist auch der Fall bei großen Temperaturschwankungen, insbesondere bei hohen Temperaturen, wenn konventionelle Haftklebemassen durch Ihren Harzanteil ein Foggingverhalten aufweisen. Auch im elektronischen Bereich lassen sich die erfindungsgemäßen Haftklebemassen sehr vorteilhaft einsetzen. Auch hier erfordert die Anwendung ein geringes Ausgasungsverhalten und kein Fogging, da diese Bestandteile die elektrische Funktion beeinflussen können. Sehr vorteilhaft werden die erfinderischen Haftklebemassen und Haftklebebänder zur Verklebung in Displays eingesetzt.

Vorteilhafte erfindungsgemäße Haftklebemassen weisen sehr geringe Ausgasungswerte und ein nicht detektierbares Foggingverhalten auf. Gegenstand der Erfindung ist daher weiter die Verwendung der erfindungsgemäßen Haftklebemassen für Selbstklebeprodukte, insbesondere für ein- oder doppelseitige Selbstklebebänder, welche

- einen Ausgasungswert von nicht mehr als 250 µg/g, bevorzugt von nicht mehr als 200 µg/g, sehr bevorzugt von nicht mehr als 150 µg/g aufweisen, derart gemessen, dass eine 40 $cm^2$ große Probenfläche einer mit der Haftklebemasse (Masseauftrag 50 $g/m^2$) beschichteten PET-Folie für eine Stunde bei 100 °C und Normaldruck ausgeheizt und die leichtflüchtigen Bestandteile über GC-MS bestimmt werden (Test D), und/oder
- einen Foggingwert von nicht weniger als 98 % aufweisen, derart gemessen, dass eine 50 $cm^2$ große Probe (Masseauftrag 50 $g/cm^2$ auf PET-Folie) eines mit der Haftklebemasse ausgerüsteten einseitigen Haftklebebandes für drei Stunden bei 100 °C und Normaldruck ausgeheizt wird und der sich auf einer Glasscheibe abscheidende Niederschlag als 60°-Reflektometerwert gemäß DIN 75201 Variante A erfasst wird, wobei der Fogging-Wert als Quotient dieses Messwertes und dem 60°-Reflektometerwert der niederschlagsfreien Glasscheibe und in Prozent angegeben wird (Test G).

Sehr bevorzugt erfüllen auch die mit den Klebemassen ausgerüsteten Klebebänder insgesamt noch diese Grenzwerte, weisen also einen Ausgasungswert von nicht mehr als 250 µg/g, bevorzugt von nicht mehr als 200 µg/g, sehr bevorzugt von nicht mehr als 150 µg/g und/oder Foggingwert von nicht weniger als 98 % auf.

Prüfmethoden

A. Brechungsindex

Der Brechungsindex der Haftklebemasse wurde in einem 25 µm dicken Film mit dem Optronic Meßgerät der Fa. Krüss bei 25 °C und weißem Licht ($\lambda$ = 550 nm ± 150 nm) nach dem Abbeschen Prinzip gemessen. Zur Temperaturstabilisierung wurde das Gerät in Verbindung mit einem Thermostaten der Fa. Lauda betrieben.

B. Klebkraft

Die Prüfung der Schälfestigkeit (Klebkraft) erfolgte gemäß PSTC-1. Auf eine 23 µm dicke PET-Folie wird eine 100 µm dicke Haftklebeschicht aufgebracht. Ein 2 cm breiter Streifen dieses Musters wird auf eine Stahlplatte durch dreimaliges doppeltes Überrollen mittels einer 2 kg Rolle verklebt. Die Platte wird eingespannt und der Selbstklebestreifen über sein freies Ende an einer Zugprüfmaschine unter einem Schälwinkel von 180° mit einer Geschwindigkeit von 300 mm/min abgezogen.

C. Gelpermeationschromatographie (GPC)

Die Bestimmung der mittleren Molekulargewichte $M_w$ und $M_n$ und der Polydispersität D erfolgte durch Gelpermeationschromatographie. Als Eluent wurde THF mit 0,1 Vol.-% Trifluoressigsäure eingesetzt. Die Messung erfolgte bei 25 °C. Als Vorsäule wurde PSSSDV, 5 μ, $10^3$ Å, ID 8,0 mm x 50 mm verwendet. Zur Auftrennung wurden die Säulen PSS-SDV, 5 μ, $10^3$ sowie $10^5$ und $10^6$ mit jeweils ID 8,0 mm x 300 mm eingesetzt. Die Probenkonzentration betrug 4 g/l, die Durchflussmenge 1,0 ml pro Minute. Es wurde gegen Polystyrol-Standards gemessen.

D. Ausgasungsverhalten

Die Klebemassen wurden auf PET-Folie im Hotmeltverfahren beschichtet. Der Masseauftrag betrug ca. 50 g/m$^2$. Nach oder vor der UV-Bestrahlung wurde eine etwa 40 cm$^2$ große Probenfläche aus dem Lappenmuster ausgeschnitten, mit Glasperlen (Durchmesser: 60 - 80 μm) bestreut und zusammengerollt in ein 25 ml Headspace-Gläschen überführt. Die Probe wurde 1 h bei 100 °C bei Normaldruck ausgeheizt und abschließend die leichtflüchtigen Bestandteile aus dem Dampfraum in den GC injiziert.

Die leichtflüchtigen Bestandteile wurden über GC-MS ermittelt. Als Messgeräte wurden verwendet:
GC: Hewlett Packard HP 5890 SERIES 11 MS: Hewlett Packard HP 5989 A
Zur Messung wurde eine DB-5 Säule mit 60 m Länge, 0,25 mm Innendurchmesser und 1 μm Filmdicke eingebaut. Die Messung erfolgte mit einem Temperaturprogramm 50 °C (3 min.) - 150 °C/min - 260 °C (2 min.). Als Trägergas wurde Wasserstoff (90 kPa) mit einem Strom von 1 ml/min benutzt. Das Splitverhältnis betrug 1:10. Der Test gilt als erfüllt, wenn die Menge der flüchtigen Anteile 250 μg/g nicht überschreitet.

E. Lichtbeständigkeit

Ein einseitig haftklebriges Haftklebebandmuster der Größe 4 x 20 cm$^2$ wird zur Hälfte mit einem Pappstreifen abgedeckt und dann 300 h mit Osram Ultra Vitalux 300 W Lampen in einem Abstand von 50 cm bestrahlt. Nach der Bestrahlung wird der Pappstreifen entfernt und die Verfärbung optisch beurteilt.
Der Test wird bestanden, wenn die Prüfstreifen nur geringe oder gar keine unterschiedlichen Verfärbungen aufweisen und die haftklebrigen Eigenschaften erhalten bleiben.

F. Transmission

Die Transmission wurde im Wellenlängenbereich von 190 bis 900 nm mit einem Uvikon 923 der Fa. Biotek Kontron an einem auf 50 μm Polyolefinfolie aufgetragenen 100 μm dicken Probenfilm und gegen eine unbeschichtete Polyolefinfolienreferenz gemessen.

G. Foggingtest

Die Prüfung erfolgt in Entsprechung zur DIN 75201, Verfahren A. Die genaue Ausführung der Versuche mitsamt den zu verwendenden Prüfapparaturen ist in der DIN 75201 ausführlich dargelegt. Der Inhalt dieser Norm soll daher zur Offenbarung dieser Anmeldung zählen.
Die Probe (50 cm$^2$ einer einseitig mit der Haftklebemasse beschichteten PET-Folie, Masseauftrag von 50 g/m$^2$) wird auf den Boden eines Bechers aus Glas ohne Ausguss mit festgelegten Maßen (entsprechend DIN 75201: Außendurchmesser 90 mm, Höhe 190 mm, Wandstärke 3,2 mm) gebracht. Der Becher wird mit einer Glasplatte abgedeckt, an der flüchtige Bestandteile aus der Probe kondensieren können. Diese Glasplatte wird gekühlt.
Der so vorbereitete Becher wird drei Stunden in einen auf Prüftemperatur von (100 ± 0,3) °C befindlichen Badthermostaten hineingestellt. Auf der Glasplatte, mit der der Behälter geschlossen wird, setzt sich bei diesem Vorgang ein Niederschlag ab, der die Lichtdurchlässigkeit der Glasplatte verändert.
Die Wirkung des Fogging-Niederschlages auf der Glasplatte wird durch die Messung der 60°-Reflektometerwerte erfasst. Als Bezug dienen dabei die 60°-Reflektometerwerte derselben Glasplatte ohne Niederschlag, die vor dem Versuch sorgfältig gereinigt wurde. Der Foggingwert F ist gemäß DIN 75201 der Quotient in Prozent aus dem 60°-Reflektometerwert einer Glasplatte mit Fogging-Niederschlag und dem 60°-Reflektometerwert derselben Glasplatte ohne Fogging-Niederschlag. Somit ist ein Foggingwert von 10 gleichbedeutend mit einer nur noch 10%igen Lichtdurchlässigkeit der Glasplatte und damit ein schlechter Foggingwert. Dem entgegen ist ein Foggingwert von 100 optimal, da keine messbaren Ausdünstungen vorhanden sind und ein solcher Artikel als foggingfrei zu bezeichnen ist.

Prüfmusterherstellung

Herstellung eines RAFT-Reglers:

Die Herstellung des Reglers Bis-2,2'-phenylethyltrithiocarbonats (Formel TTC 1) erfolgte ausgehend von 2-Phenylethylbromid mit Dischwefelkohlenstoff und Natriumhydroxid nach einer Vorschrift von Synth. Comm., 1988, 18 (13), 1531. Ausbeute 72 %. $^1$H-NMR ($CDCl_3$), δ: 7,20-7,40 ppm (m, 10 H); 3,81 ppm (m, 1 H); 3,71 ppm (m, 1 H); 1,59 ppm (d, 3 H); 1,53 ppm (d, 3 H).

Herstellung von Nitroxiden:

(a) Herstellung des difunktionellen Alkoxyamins (NIT 3):

Es wurde analog der Versuchsvorschrift aus Journal of American Chemical Society, 1999, 121(16), 3904 vorgegangen. Als Ausgangsstoffe wurden 1,4-Divinylbenzol und Nitroxid (NIT 4) eingesetzt.

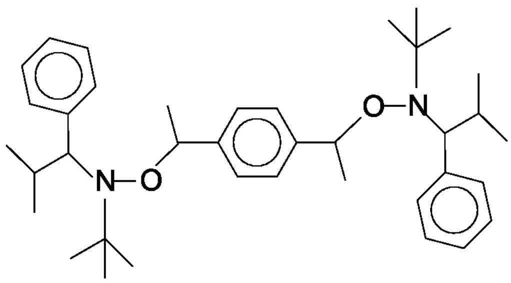

(NIT 3)

(b) Herstellung des Nitroxids (NIT 4) (2,2,5-Trimethyl-4-phenyl-3-azahexan-3-nitroxid):

Es wurde analog der Versuchsvorschrift aus Journal of American Chemical Society, 1999, 121(16), 3904 vorgegangen.

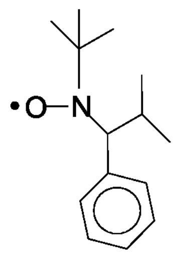

(NIT 4)

Herstellung von Polystyrol (POS 1):

In einem für die radikalische Polymerisation konventionellen 2 L Reaktor werden unter Stickstoffatmosphäre 362 g Styrol und 3,64 g Regler Bis-2,2'-phenylethyltrithiocarbonat vorgelegt. Es wird auf 110 °C Innentemperatur erhitzt und mit 0,15 g Vazo 67® (DuPont) initiiert. Nach 10 Stunden Reaktionszeit werden 100 g Toluol hinzugegeben. Nach 24 Stunden Reaktionszeit wird mit weiteren 0,1 g Vazo 67® initiiert und weitere 24 Stunden polymerisiert. Während der Polymerisation steigt die Viskosität merklich an. Zur Kompensation werden 150 g Toluol als Endverdünnung nach 48 Stunden hinzugegeben.

Zur Aufreinigung wurde das Polymer in Methanol gefällt, über eine Fritte abfiltriert und anschließend im Vakuumtrockenschrank getrocknet.

Die Durchführung der Gelpermeationschromatographie (Test C) gegen Polystyrol-Standards ergab $M_n$ = 29.300 g/mol und eine Polydispersität D von 1,2.

Herstellung von Polystyrol (POS 2):

In einem für die radikalische Polymerisation konventionellen 2 L Reaktor werden unter Stickstoffatmosphäre 180 g Styrol, 180 g Methacrylat-terminiertes Polystyrol (Methacromer™ PS 12, Fa. Polymer Chemistry Innovations, $M_w$ = 11.000 bis 13.000 g/mol) und 3,64 g Regler Bis-2,2'-phenylethyltrithiocarbonat vorgelegt. Es wird auf 110 °C Innentemperatur erhitzt und mit 0,15 g Vazo 67® (DuPont) initiiert. Nach 10 Stunden Reaktionszeit werden 100 g Toluol hinzugegeben. Nach 24 Stunden Reaktionszeit wird mit weiteren 0,1 g Vazo 67® initiiert und weitere 24 Stunden polymerisiert. Während der Polymerisation steigt die Viskosität merklich an. Zur Kompensation werden 150 g Toluol als Endverdünnung nach 48 Stunden hinzugegeben.

Zur Aufreinigung wurde das Polymer in Methanol gefällt, über eine Fritte abfiltriert und anschließend im Vakuumtrockenschrank getrocknet.

Die Durchführung der Gelpermeationschromatographie (Test C) gegen Polystyrol-Standards ergab $M_w$ = 35.200 g/mol und eine Polydispersität D von 1,5.

Beispiel 1

Ein für radikalische Polymerisationen konventioneller Reaktor wurde mit 120 g Trithiocarbonat-funktionalisiertem Polystyrol (POS 1), 112 g Isobornylacrylat, 168 g 2-Ethylhexylacrylat, und 0,12 g Vazo 67® (Fa. DuPont) befüllt. Nach 20 Minuten Durchleiten von Argon und zweimaligem Entgasen wurde der Reaktor unter Rühren auf 70 °C hochgeheizt und für 48 h polymerisiert.
Zur Gewinnung des Polymers wurde auf RT abgekühlt, das Blockcopolymer mit Aceton/Siedegrenzenbenzin auf 50 % verdünnt und dann über ein konventionelles Rakel auf einen mit Saran geprimerten 23 μm dicken PET-Träger und ein mit 1,5 g/$m^2$ silikonisiertes Trennpapier beschichtet und dann über 6 verschiedene Stufen mit 60, 80, 100, 120 und 120 und 120 °C getrocknet. Die durchschnittliche Aufenthaltsdauer in jeder Temperaturzone betrug 80 Sekunden. Der Masseauftrag betrug jeweils 50 g/$m^2$.

Beispiel 2

Ein für radikalische Polymerisationen konventioneller Reaktor wurde mit 120 g Trithiocarbonat-funktionalisiertem Polystyrol (POS 2), 112 g Isobornylacrylat, 168 g 2- Ethylhexylacrylat, und 0,12 g Vazo 67® (Fa. DuPont) befüllt. Nach 20 Minuten Durchleiten von Argon und zweimaligem Entgasen wurde der Reaktor unter Rühren auf 70 °C hochgeheizt und für 48 h polymerisiert.
Zur Gewinnung des Polymers wurde auf RT abgekühlt, das Blockcopolymer mit Aceton/Siedegrenzenbenzin auf 50 % verdünnt und dann über ein konventionelles Rakel auf einen mit Saran geprimerten 23 μm dicken PET-Träger und ein mit 1.5 g/$m^2$ silikonisiertes Trennpapier beschichtet und dann über 6 verschiedene Stufen mit 60, 80, 100, 120 und 120 und 120 °C getrocknet. Die durchschnittliche Aufenthaltsdauer in jeder Temperaturzone betrug 80 Sekunden. Der Masseauftrag betrug jeweils 50 g/$m^2$.

Beispiel 3:

Allgemeine Durchführung: Eine Mischung aus dem Alkoxyamin (NIT 3) und dem Nitroxid (NIT 4) (10 Mol-% zu Alkoxyamin (NIT 3)) wird mit dem Monomeren B (für den späteren Polymerblock P(B)) gemischt, mehrmals unter Herabkühlen auf - 78 °C entgast und anschließend in einem geschlossenen Behälter unter Druck auf 110 °C erhitzt. Nach 36 h Reaktionszeit wird das Monomer A (für den späteren Polymerblock P(A)) hinzugegeben und weitere 24 Stunden bei dieser Temperatur polymerisiert.
In Analogie zur allgemeinen Durchführung der Polymerisation wurden 0,739 g des difunktionellen Initiators (NIT 3), 0,0287 g des freien Nitroxids (NIT 4), 128 g Isobornylacrylat und 192 g 2-Ethylhexylacrylat als Monomere (B) und 180 g o-Methoxylstyrol als Monomer (A) eingesetzt. Zur Isolierung des Polymers wurde auf Raumtemperatur abgekühlt, das Blockcopolymer in 750 ml Dichlormethan gelöst und dann in 6,0 l Methanol (auf -78 °C gekühlt) unter starkem Rühren gefällt. Der Niederschlag wurde über eine gekühlte Fritte abfiltriert.
Das erhaltene Produkt wurde im Vakuumtrockenschrank bei 10 Torr und 45 °C 12 Stunden lang aufkonzentriert.
Das Blockcopolymer wurde aus der Schmelze auf eine mit Saran geprimerte 23 μm dicke PET-Trägerfolie oder auf ein mit 1,5 g/$m^2$ Silikonauftrag versehendes Trennpapier beschichtet. In einer IR-Zone wurde für 80 Sekunden mit 120 °C nachgeheizt. Der Masseauftrag betrug 50 g/$m^2$.

Ergebnisse

Nach der Prüfmusterherstellung wurden zunächst von allen Beispielen 1 bis 3 der Brechungsindex gemessen.

Hierfür wurden die auf Trennpapier eingesetzten Muster verwendet. In der Tabelle 2 sind die gemessenen Brechungsindizes zusammengefasst. Alle Werte wurden bei Raumtemperatur bestimmt.

| Tabelle 2 | |
|---|---|
| Beispiel | Brechungsindex $n_d$ (Test A) |
| 1 | 1,521 |
| 2 | 1,522 |
| 3 | 1,525 |

Die gemessenen Werte belegen, dass alle Haftklebemassenbeispiele 1 bis 3 auch ohne Harzzusatz den geforderten Mindestwert von $n_d$ nicht weniger als 1,52 erreichen.

Zur Bestimmung der Klebkraft wurden die auf PET-Folie beschichteten Muster einer Klebkraftprüfung unterzogen, um zu zeigen, dass diese Beispiele immer noch inhärent klebrig sind. Es wurde die Klebkraft auf Stahl gemessen. Die Werte sind in Tabelle 3 zusammengefasst.

| Tabelle 3 | |
|---|---|
| Beispiel | KK Stahl (Test B) |
| 1 | 2,3 |
| 2 | 2,1 |
| 3 | 2,0 |
| KK: Sofortklebkraft in N/cm | |

Aus den gemessenen Werten geht hervor, dass die erfindungsgemäßen Haftklebebänder mit Sofortklebkräften um 2 N/cm haftklebrige Eigenschaften besitzen.

Für den Einsatzbereich "geringes Fogging-/Ausgasungsverhalten" wurden die erfindungsgemäßen Haftklebemassen einem Ausgasungstest (Test D) und einem Foggingtest (Test G) unterzogen.

Im Foggingtest werden eher Bestandteile nachgewiesen, die sich auf der Scheibe niederschlagen können und z. B. Harzzusätzen entstammen. Diese sind aber nicht in den erfindungsgemäßen Beispielen enthalten, so dass diese kein Fogging aufwiesen.

Zur weiteren Überprüfung wurde daher das Ausgasungsverhalten via Headspace-GC (Test D) ermittelt. Die Messwerte sind in Tabelle 4 dargestellt.

| Tabelle 4 | | |
|---|---|---|
| Beispiel | Flüchtige Anteile [$\mu$g/g] (Test D) | Foggingwert [%] (Test G) |
| 1 | 45 | > 99 |
| 2 | 73 | > 99 |
| 3 | 120 | > 99 |

Die gemessenen Werte liegen auf einem sehr niedrigen Niveau, und somit zeigen die Beispiele 1 bis 3 ein geringes Ausgasungsverhalten.

Für den Einsatz in Außenanwendungen wurde zudem Test E durchgeführt. Hier werden die Haftklebebandbeispiele 300 h mit intensiven Glühlampen bestrahlt, die die Sonnenlichteinwirkung simulieren. Die Ergebnisse sind in Tabelle 5 zusammengefügt.

| Tabelle 5 | |
|---|---|
| Beispiel | Lichtbeständigkeit (Test E) |
| 1 | Bestanden |
| 2 | Bestanden |

(fortgesetzt)

| Tabelle 5 | |
|---|---|
| Beispiel | Lichtbeständigkeit (Test E) |
| 3 | Bestanden |

Die Ergebnisse belegen, dass die für Polyacrylate üblichen Alterungsstabilitäten erreicht werden. Somit lassen sich die erfindungsgemäßen Haftklebemassen auch für Außenanwendungen oder für Anwendungen mit erhöhten UV-Dosen einsetzen.

Weiterhin wurde die Lichtdurchlässigkeit der Haftklebebänder mittels Test F bestimmt. Es wurde die Transmission in einem Bereich von 400 bis 700 nm untersucht. Die Ergebnisse sind in Tabelle 6 aufgelistet.

| Tabelle 6 | |
|---|---|
| Beispiel | Transmission (Test F) |
| 1 | 92,6% |
| 2 | 93,4% |
| 3 | 95,1% |

Alle Haftklebemassen sind farblos und weisen im sichtbaren Bereich eine sehr gute und wellenlängenunabhängige Transparenz auf.

**Patentansprüche**

1. Verwendung einer Haftklebemasse auf Basis von zumindest 50 % eines oder mehrerer Blockcopolymere, wobei zumindest ein Blockcopolymer zumindest teilweise auf Basis von (Meth-)Acrylsäurederivaten zusammengesetzt ist, wobei das zumindest eine Blockcopolymer mindestens die Einheit P(A)-P(B)-P(A) aus wenigstens einem Polymerblock P(B) und wenigstens zwei Polymerblöcken P(A) aufweist, wobei

    - P(A) unabhängig voneinander Homo- oder Copolymerblöcke aus Monomeren der Gruppe A repräsentieren, wobei die (Co-)Polymerblöcke P(A) jeweils eine Erweichungstemperatur im Bereich von 0 °C bis + 175 °C aufweisen,
    - P(B) einen Homo- oder Copolymerblock aus Monomeren der Gruppe B repräsentiert, wobei der (Co-)Polymerblock P(B) eine Erweichungstemperatur im Bereich von - 130 °C bis + 10 °C aufweist,
    - die (Co-)Polymerblöcke P(A) und P(B) bei 25 °C nicht homogen miteinander mischbar sind,

    und wobei

    - die Haftklebemasse einen Brechungsindex $n_{d,H}$ von $n_{d,H} \geq 1{,}52$ bei 25 °C aufweist,
    - zumindest einer der (Co-)Polymerblöcke P(A) einen Brechungsindex $n_{d,A}$ von $n_{d,A} \geq 1{,}58$ bei 25 °C aufweisen,
    - der (Co-)Polymerblock P(B) einen Brechungsindex $n_{d,B}$ von $n_{d,B} \geq 1{,}43$ bei 25 °C aufweist,

    wobei der Brechungsindex jeweils bei T = 25 °C mit weißem Licht (Wellenlänge $\lambda$ = 550 nm $\pm$ 150 nm) nach dem Abbeschen Prinzip gemessen wird,
    zur Verklebung von optisch transparenten Substraten.

2. Verwendung nach Anspruch 1 zur Verklebung optisch aktiver Folien für Anzeigemodule auf Flüssigkristallbasis.

3. Verwendung nach zumindest einem der vorangehenden Ansprüche, **dadurch gekennzeichnet, dass** alle (Co-)Polymerblöcke P(A) jeweils einen Brechungsindex $n_{d,A}$ von $n_{d,A} \geq 1{,}58$ bei 25 °C aufweisen.

4. Verwendung nach zumindest einem der vorangehenden Ansprüche, **dadurch gekennzeichnet, dass** eines oder alle der Blockcopolymere sich durch eine oder mehrere der folgenden allgemeinen Formeln beschrieben werden können:

P(A)-P(B)-P(A) (I)

P(B)-P(A)-P(B)-P(A)-P(B) (II)

$[P(A)-P(B)]_nX$ (III)

$[P(A)-P(B)]_nX[P(A)]_m$ (IV)

wobei

- n = 3 bis 12, m = 3 bis 12
- X einen multifunktionellen Verzweigungsbereich darstellt,
- P(A) unabhängig voneinander Homo- oder Copolymerblöcke aus Monomeren der Gruppe A repräsentieren, wobei die (Co-)Polymerblöcke P(A) jeweils eine Erweichungstemperatur im Bereich von 0 °C bis + 175 °C und jeweils einen Brechungsindex $n_{d,A'}$ von $n_{d,A'} \geq 1{,}58$ bei 25 °C aufweisen,
- P(B) unabhängig voneinander Homo- oder Copolymerblöcke aus Monomeren der Gruppe B repräsentieren, wobei die (Co-)Polymerblöcke P(B) jeweils eine Erweichungstemperatur im Bereich von - 130 °C bis + 10 °C und jeweils einen Brechungsindex $n_{d,B'}$ von $n_{d,B'} \geq 1{,}43$ bei 25 °C aufweisen.

**5.** Verwendung nach zumindest einem der vorangehenden Ansprüche, **dadurch gekennzeichnet, dass** das Verhältnis der Kettenlängen der Polymerblöcke P(A) zu denen der Polymerblöcke P(B) so gewählt wird, dass die Polymerblöcke P(A) als disperse Phase ("Domänen") in einer kontinuierlichen Matrix der Polymerblöcke P(B) vorliegen, insbesondere als kugelförmige oder verzerrt kugelförmige oder zylinderförmige Domänen.

**6.** Verwendung nach zumindest einem der vorangehenden Ansprüche, beinhaltend einen Blend aus

- zumindest einem Diblockcopolymer mit zumindest einem Triblockcopolymer, oder
- zumindest einem Diblockcopolymer mit zumindest einem sternförmigen Blockcopolymer, oder
- zumindest einem Triblockcopolymer mit zumindest einem sternförmigen Blockcopolymer.

**7.** Verwendung nach zumindest einem der vorangehenden Ansprüche, **dadurch gekennzeichnet, dass** der Haftklebemasse ein oder mehrere Homo- und/oder Copolymere der Form P'(A) und/oder P'(B) beigemischt sind, wobei

- die (Co-)Polymere P'(A) jeweils eine Erweichungstemperatur im Bereich von 0 °C bis + 175 °C und jeweils einen Brechungsindex $n_{d,A'}$ von $n_{d,A'} \geq 1{,}58$ bei 25 °C aufweisen,
- die (Co-)Polymere P'(B) jeweils eine Erweichungstemperatur im Bereich von - 130 °C bis + 10 °C und jeweils einen Brechungsindex $n_{d,B'}$ von $n_{d,B'} \geq 1{,}43$ bei 25 °C aufweisen.

**8.** Verwendung nach zumindest einem der vorangehenden Ansprüche, **gekennzeichnet durch** einen Ausgasungswert von nicht mehr als 250 $\mu$g/g, derart gemessen, dass eine 40 $cm^2$ große Probenfläche einer mit der Haftklebemasse (Masseauftrag 50 $g/m^2$) beschichteten PET-Folie für eine Stunde bei 100 °C und Normaldruck ausgeheizt und die leichtflüchtigen Bestandteile über GC-MS bestimmt werden.

**9.** Verwendung nach zumindest einem der vorangehenden Ansprüche, **gekennzeichnet durch** einen Foggingwert von nicht weniger als 98 %, derart gemessen, dass eine 50 $cm^2$ große Probenfläche einer mit der Haftklebemasse (Masseauftrag 50 $g/m^2$) beschichteten PET-Folie für drei Stunden bei 100 °C und Normaldruck ausgeheizt wird und der sich auf einer Glasscheibe abscheidende Niederschlag als 60°-Reflektometerwert erfasst wird, wobei der Fogging-Wert als Quotient dieses Wertes und dem 60°-Reflektometerwert der niederschlagsfreien Glasscheibe in Prozent angegeben wird.

**10.** Verwendung nach zumindest einem der vorangehenden Ansprüche, **dadurch gekennzeichnet, dass** die Haftklebemasse in Form zumindest einer Schicht vorliegt.

**11.** Verwendung nach zumindest einem der vorangehenden Ansprüche, **dadurch gekennzeichnet, dass** die Haftklebemasse auf zumindest einer Trägerschicht, insbesondere in Form einer Folienschicht, beschichtet ist.

## Claims

1. Use of a pressure-sensitive adhesive based on at least 50% of one or more block copolymers, at least one block copolymer being composed at least in part on the basis of (meth)acrylic acid derivatives, the at least one block copolymer comprising at least the unit P(A)-P(B)-P(A), comprising at least one polymer block P(B) and at least two polymer blocks P(A), where

   • P(A) independently of one another represent homopolymer or copolymer blocks comprising monomers of group A, the (co)polymer blocks P(A) each having a softening temperature in the range from 0°C to +175°C,
   • P(B) represents a homopolymer or copolymer block comprising monomers of group B, the (co)polymer block P(B) having a softening temperature in the range from -130°C to +10°C, and
   • the (co)polymer blocks P(A) and P(B) are not homogeneously miscible with one another at 25°C,

   and where

   • the pressure-sensitive adhesive has a refractive index $n_{d,H}$ of $n_{d,H} \geq 1.52$ at 25°C,
   • at least one of the (co)polymer blocks P(A) have a refractive index $n_{d,A}$ of $n_{d,A} \geq 1.58$ at 25°C, and
   • the (co) polymer block P(B) has a refractive index $n_{d,B}$ of $n_{d,B} \geq 1.43$ at 25°C,

   where the refractive index is measured in each case at T=25°C with white light (wavelength $\lambda$ = 550nm $\pm$ 150 nm) in accordance with the Abbe principle,
   for bonding optically transparent substrates.

2. Use according to claim 1 for the bonding of optically active films for liquid-crystal-based display modules.

3. Use according to at least one of the preceding claims, **characterized in that**
   all the (co)polymer blocks P(A) each have a refractive index $n_{d,A}$ of $n_{d,A} \geq 1.58$ at 25°C.

4. Use according to at least one of the preceding claims, **characterized in that**
   one or all of the block copolymers may be described by one or more of the following general formulae:

   P(A)-P(B)-P(A) (I)

   P(B)-P(A)-P(B)-P(A)-P(B) (II)

   $[P(A)-P(B)]_nX$ (III)

   $[P(A)-P(B)]_nX[P(A)]_m$ (IV)

   where

   • n = 3 to 12, m = 3 to 12
   • X represents a polyfunctional branching region,
   • P(A) independently of one another represent homopolymer or copolymer blocks comprising monomers of group A, the (co)polymer blocks P(A) each having a softening temperature in the range from 0°C to +175°C and each having a refractive index $n_{d,A'}$ of $n_{d,A'} \geq 1.58$ at 25°C,
   • P(B) independently of one another represent homopolymer or copolymer blocks comprising monomers of group B, the (co)polymer blocks P(B) each having a softening temperature in the range from -130°C to +10°C and each having a refractive index $n_{d,B'}$ of $n_{d,B'} \geq 1.43$ at 25°C.

5. Use according to at least one of the preceding claims, **characterized in that**
   the ratio of the chain lengths of the polymer blocks P(A) to those of the polymer blocks P(B) is chosen such that the polymer blocks P(A) are present as a disperse phase ("domains") in a continuous matrix of the polymer blocks P(B), in particular as spherical or distortedly spherical or cylindrical domains.

6. Use according to at least one of the preceding claims, comprising a blend of

   • at least one diblock copolymer with at least one triblock copolymer, or

- at least one diblock copolymer with at least one star-shaped block copolymer, or
- at least one triblock copolymer with at least one star-shaped block copolymer.

**7.** Use according to at least one of the preceding claims, **characterized in that** the pressure-sensitive adhesive is admixed with one or more homopolymers and/or copolymers of the form P'(A) and/or P'(B), where

- the (co)polymers P'(A) each have a softening temperature in the range from 0°C to +175°C and each have a refractive index $n_{d,A'}$ of $n_{d,A'} \geq 1.58$ at 25°C,
- the (co)polymers P'(B) each have a softening temperature in the range from -130°C to +10°C and each have a refractive index $n_{d,B'}$ of $n_{d,B'} \geq 1.43$ at 25°C.

**8.** Use according to at least one of the preceding claims, **characterized by** an outgassing figure of not more than 250 μg/g, measured by heating a sample area, measuring 40 $cm^2$, of a PET film coated (coat weight 50 $g/m^2$) with the pressure-sensitive adhesive under atmospheric pressure at 100°C for one hour and determining the volatile constituents via GC-MS.

**9.** Use according to at least one of the preceding claims, **characterized by** a fogging value of not less than 98%, measured by heating a sample area, measuring 50. $cm^2$, of a PET film coated (coat weight 50 $g/m^2$) with the pressure-sensitive adhesive under atmospheric pressure at 100°C for three hours and detecting the precipitation, which deposits on a pane of glass, as the 60° reflectometer value, the fogging value being reported as the ratio of this value to the 60° reflectometer value of the precipitation-free pane of glass, expressed as a percentage.

**10.** Use according to at least one of the preceding claims, **characterized in that** the pressure-sensitive adhesive is in the form of at least one layer.

**11.** Use according to at least one of the preceding claims, **characterized in that** the pressure-sensitive adhesive is coated on at least one carrier layer, in particular in the form of a film layer.

**Revendications**

**1.** Utilisation d'une masse adhésive de contact à base d'au moins 50 % d'un ou de plusieurs copolymères séquencés, au moins un copolymère séquencé étant au moins partiellement composé de dérivés d'acide (méth)acrylique, ledit au moins un copolymère séquencé comprenant au moins l'unité P(A)-P(B)-P(A) constituée par au moins une séquence polymère P(B) et au moins deux séquences polymères P(A),

- les P(A) représentant indépendamment les uns des autres des séquences homo- ou copolymères de monomères du groupe A, les séquences (co)polymères P(A) présentant chacune une température de ramollissement dans la plage allant de 0 °C à +175 °C,
- P(B) représentant une séquence homo- ou copolymère de monomères du groupe (B), la séquence (co)polymère P(B) présentant une température de ramollissement dans la plage allant de -130 °C à +10 °C,
- les séquences (co)polymères P(A) et P(B) n'étant pas miscibles l'une avec l'autre de manière homogène à 25 °C, et
- la masse adhésive de contact présentant un indice de réfraction $n_{d,H}$ de $n_{d,H} \geq 1{,}52$ à 25 °C,
- au moins une des séquences (co)polymères P(A) présentant un indice de réfraction $n_{d,A}$ de $n_{d,A} \geq 1{,}58$ à 25 °C,
- la séquence (co)polymère P(B) présentant un indice de réfraction $n_{d,B}$ de $n_{d,B} \geq 1{,}43$ à 25 °C,

l'indice de réfraction étant mesuré à chaque fois à T = 25 °C avec de la lumière blanche (longueur d'onde $\lambda$ = 550 nm ± 150 nm) selon le principe d'Abbe,
pour le collage de substrats optiquement transparents.

**2.** Utilisation selon la revendication 1, pour le collage de feuilles optiquement actives pour des modules d'écrans à base de cristaux liquides.

**3.** Utilisation selon au moins l'une quelconque des revendications précédentes, **caractérisée en ce que** toutes les séquences (co)polymères P(A) présentent chacune un indice de réfraction $n_{d,A}$ de $n_{d,A} \geq 1{,}58$ à 25 °C.

**4.** Utilisation selon au moins l'une quelconque des revendications précédentes, **caractérisée en ce qu'**un des ou tous les copolymères séquencés peuvent être décrits par une ou plusieurs des formules générales suivantes :

P(A)-P(B)-P(A) (I)

P(B)-P(A)-P(B)-P(A)-P(B) (II)

$[P(A)-P(B)]_nX$ (III)

$[P(A)-P(B)]_nx[P(A)]_m$ (IV)

dans lesquelles

- n = 3 à 12, m = 3 à 12,
- X représente une zone de ramification multifonctionnelle,
- les P(A) représentent indépendamment les uns des autres des séquences homo- ou copolymères de monomères du groupe A, les séquences (co)polymères P(A) présentant chacune une température de ramollissement dans la plage allant de 0 °C à +175 °C, et présentant chacune un indice de réfraction $n_{d,A'}$ de $n_{d,A'} \geq 1{,}58$ à 25 °C,
- les P(B) représentent indépendamment les uns des autres des séquences homo- ou copolymères de monomères du groupe B, les séquences (co)polymères P(B) présentant chacune une température de ramollissement dans la plage allant de -130 °C à +10 °C, et présentant chacune un indice de réfraction $n_{d,B'}$ de $n_{d,B'} \geq 1{,}43$ à 25 °C.

**5.** Utilisation selon au moins l'une quelconque des revendications précédentes, **caractérisée en ce que** le rapport entre les longueurs de chaînes des séquences polymères P(A) et celles des séquences polymères P(B) est choisi de telle sorte que les séquences polymères P(A) se présentent sous la forme d'une phase dispersée (« domaines ») dans une matrice continue des séquences polymères P(B), notamment sous la forme de domaines sphériques ou sphériques biaisés ou cylindriques.

**6.** Utilisation selon au moins l'une quelconque des revendications précédentes, contenant un mélange de :

- au moins un copolymère diséquencé avec au moins un copolymère triséquencé, ou
- au moins un copolymère diséquencé avec au moins un copolymère séquencé en étoile, ou
- au moins un copolymère triséquencé avec au moins un copolymère séquencé en étoile.

**7.** Utilisation selon au moins l'une quelconque des revendications précédentes, **caractérisée en ce qu'**un ou plusieurs homo- et/ou copolymères de la forme P'(A) et/ou P'(B) sont incorporés dans la masse adhésive de contact,

- les (co)polymère P'(A) présentant chacun une température de ramollissement dans la plage allant de 0 °C à +175 °C et présentant chacun indice de réfraction $n_{d,A'}$ de $n_{d,A'} \geq 1{,}58$ à 25 °C,
- les (co)polymères P'(B) présentant chacun une température de ramollissement dans la plage allant de - 130 °C à +10 °C et présentant chacun indice de réfraction $n_{d,B'}$ de $n_{d,B'} \geq 1{,}43$ à 25 °C.

**8.** Utilisation selon au moins l'une quelconque des revendications précédentes, **caractérisée par** une valeur de dégazage inférieure ou égale à 250 $\mu$g/g, mesurée en chauffant une surface d'échantillon d'une taille de 40 $cm^2$ d'une feuille en PET revêtue avec la masse adhésive de contact (masse appliquée 50 $g/m^2$) pendant une heure à 100 °C et pression normale, et en déterminant les constituants volatils par GC-MS.

**9.** Utilisation selon au moins l'une quelconque des revendications précédentes, **caractérisée par** une valeur d'embuage supérieure ou égale à 98 %, mesurée en chauffant une surface d'échantillon d'une taille de 50 $cm^2$ d'une feuille en PET revêtue avec la masse adhésive de contact (masse appliquée 50 $g/m^2$) pendant trois heures à 100 °C et pression normale, et en enregistrant le précipité déposé sur une plaque de verre en tant que valeur de réflectométrie à 60°, la valeur d'embuage étant donnée par le quotient de cette valeur et de la valeur de réflectométrie à 60° de la plaque de verre sans précipité en pourcentage.

**10.** Utilisation selon au moins l'une quelconque des revendications précédentes, **caractérisée en ce que** la masse adhésive de contact se présente sous la forme d'au moins une couche.

**11.** Utilisation selon au moins l'une quelconque des revendications précédentes, **caractérisée en ce que** la masse

adhésive de contact est revêtue sur au moins une couche support, notamment sous la forme d'une couche en forme de feuille.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4874671 A
- US 5639530 A
- US 6266166 B
- US 4581429 A
- WO 9813392 A1
- EP 735052 A1
- WO 9624620 A1
- WO 9844008 A1
- DE 19949352 A1
- EP 0824111 A1
- EP 826698 A1
- EP 824110 A1
- EP 841346 A1
- EP 850957 A1
- US 5945491 A
- US 5854364 A
- US 5789487 A
- WO 9801478 A1
- WO 9931144 A1
- US 3140340 A
- US 3648348 A
- US 4576850 A
- US 4588258 A
- US 4775219 A
- US 4801193 A
- US 4805984 A
- US 4895428 A
- US 4906070 A
- US 4938563 A
- US 5056892 A
- US 5138488 A
- US 5175030 A
- US 5183597 A


### In der Beschreibung aufgeführte Nicht-Patentliteratur


- **HAWKER.** Beitrag zur Hauptversammlung. American Chemical Society, 1997
- **HUSEMANN.** *Beitrag zum IUPAC World-Polymer Meeting,* 1998
- *Macromolecules,* 1995, vol. 28, 7886
- *Macromolecules,* 2000, vol. 33, 243-245
- **FOUASSIER.** Photoinitiation, Photopolymerization and Photocuring: Fundamentals and Applications. Hanser-Verlag, 1995
- **CARROY et al.** Chemistry and Technology of UV and EB Formulation for Coatings, Inks and Paints. SITA, 1994
- Electron Beam Processing. Chemistry and Technology of UV and EB formulation for Coatings, Inks and Paints. SITA, 1991, vol. 1
- *Synth. Comm.,* 1988, vol. 18 (13), 1531
- *Journal of American Chemical Society,* 1999, vol. 121 (16), 3904